# EUROPEAN PATENT SPECIFICATION

(11) **EP 2 887 240 B1**
(45) Date of publication and mention of the grant of the patent: **31.08.2016**
(21) Application number: 14197658.9
(22) Date of filing: 12.12.2014
(51) Int. Cl.: G06F 17/30

(54) **Electronic product information display system**
Elektronisches Produktinformationsanzeigesystem
Système d'affichage d'informations de produit électronique

(30) Priority: 23.12.2013 US 201314139615
(43) Date of publication of application: 24.06.2015
(73) Proprietor: SAP SE, 69190 Walldorf (DE)
(72) Inventor: Egen, Gerd, 69190 Walldorf (DE)
(74) Representative: Richardt Patentanwälte PartG mbB

(56) References cited:
- EP-A2- 1 452 974
- US-A1- 2002 191 033
- US-A1- 2003 097 364
- US-A1- 2004 205 536
- US-B1- 6 502 101

## Description

### Field of the invention

The invention relates to the field of display devices, and more particularly to the field of electronic product information display systems.

### Background and related art

Manual shelf or item pricing for informing consumers about a large number of different goods in retail stores has the disadvantage that the creation, distribution and updating of the information to the individual products is a time consuming task. Also, the system is inflexible in case product information, e.g. the price, changes. Additional problems arise when the printed shelf price labels do not match the price contained in the store's checkout scanner price data base. Electronic product information systems are increasingly being used to address these issues. However, electronic product information systems face the problem that the amount and type of data that shall be presented to the customers may differ greatly depending on the product: a retail store may comprise comparatively "simple" products like salt or sugar and at the same time complex electronic goods like smart phones, TV-sets, and the like. For some of the goods, media files like images, audio files or films may be available while for other goods only plain text information is available. An additional problem arises because product related information if often stored in hierarchical data structures, whereby the topology of said structure may differ for different kinds of goods. The electronic labels and other forms of display devices used in current product information display systems are usually small, so the available space for presenting information is very limited. Thus, current electronic product information display systems and their user interfaces are of limited abilities in presenting product related information for a plurality of different products, in particular if the product information is stored in the form of deep hierarchically structured data. In particular, user interfaces when presenting hierarchically structured data beyond just a very few data items of a particular data row or other data object are limited to presenting just a very few data items at the same time.

US 200/0205536 A1 describes a method for the conversion and display of tree-structured information to a "treetable", a table -like display structure, in which each path from a root to a leaf node is represented by a single column, and cells representing the intermediate successors of a node are placed immediately under that node. Variation in the amount of space given to cells within particular columns is used to allow more detail to be given for selected paths and subtrees.

US 20020191033 A1 describes a graphical user interface for displaying hierarchical data, such as extensible markup language (XML) data, in hypertext markup language (HTML) format in a convenient and efficient manner. For data having subordinate data, and acutatable subordinates data indicator is displayed on the user interface. When actuated, the subordinate data is displayed in a similar format as the parent data. Two methods are described for building the tables. A first method initially parses all the data and builds the necessary tables for display. A second method initially parses only the top level of data and then builds subordinate tables as they are requested by a user.

### Summary

It is an objective of the present invention to provide for an improved product information display system and corresponding storage medium and method as specified in the independent claims. Embodiments of the invention are given in the dependent claims. Embodiments of the present invention can be freely combined with each other if they are not mutually exclusive.

In one aspect, the invention relates to an electronic product information display system. The system comprises a display device which is assigned to at least one of a plurality of products. The product may be, for example, a TV-set, a textile, a children's toy or the like. The display device may also be assigned to a plurality of goods of the same product type. The assignment may be based on a physical attachment of the display device to the at least one product, by a special proximity of the display device and the at least one product, or the like. The display device has a display and is configured for displaying a code on said display. For example, the code may be a bar code or a 2D-code, e.g. a QR ("Quick Response") code. The code is indicative of the at least one product assigned to said display device.

The system further comprises a mobile telecommunication device. The mobile telecommunication device is assigned to a user and is configured for:
- reading the code from the display of the display device;
- extracting an identifier of the at least one product from the read code;
- requesting information related to the at least one product from a database by sending a request, the request comprising the extracted identifier;
- receiving, in response to the sending of the request, a table structure from a transformation engine, the table structure comprising the requested product-related information; and
- displaying the received table structure via a display of the mobile telecommunication device to the user.

The system further comprises the transformation engine. The transformation engine is configured for transforming, in response to the request, a hierarchical dataset received from the database and comprising the requested product-related information into the table structure. The hierarchical dataset includes multiple hierarchy levels. Each hierarchical level comprises one or more data items. Each data item has assigned a parameter and at least some of the data items comprise a parameter value of the parameter respectively assigned to said data item. The transformation comprises building the table structure in memory. The building of the table structure comprises:
- representing each of at least two of the multiple hierarchy levels as a level indication row; the table structure includes a level indication area. The level indication area includes the level indication rows.
- creating columns of the table structure by identifying the one of the at least two hierarchical levels which comprises a maximum number of data items having assigned a parameter that is unique within the data items of said hierarchical level and by representing each unique parameter being assigned to a data item of the identified hierarchical level as a column of the table structure, each of the level indication rows including a parameter label for each column of said level indication row. A parameter label may be a label displayed in a cell of a level indication row of the table structure. Said label may be indicative of the parameter that is represented by said cell. The label may, for example, be identical to a unique parameter of one of the data items of a hierarchical level represented by said level indication row comprising said cell.
- writing the level indication rows in the memory;
- retrieving, into the memory from the database, one or more data rows for each of the at least two hierarchy levels, whereby each data row selectively comprises parameter values which are contained in data items which belong to said hierarchical level;
- ordering and grouping the retrieved data rows, whereby the grouping is performed such that all data rows having been retrieved for a particular hierarchical level and which share, in the hierarchical dataset, the same data item as their parent node, are grouped together, and whereby the ordering is performed such that said grouped data rows directly succeed the one of the retrieved data rows which comprises a parameter value which is contained in said parent node and/or which is contained in a sibling node of said parent node in the hierarchical dataset;
- writing the ordered and grouped data rows of each of the at least two hierarchy levels to the table structure in the memory.

This may be advantageous, because the above described transformation allows to flexibly present only a subset of the multiple hierarchies of hierarchically organized product related information in a highly condensed, tabular form. Thus, product related information which formerly could not be presented to a user on a screen of very limited size (the broadest side of a display of a mobile telecommunication device such as a smartphone or of an electronic label or price tag is often smaller than 10 cm) may now be presentable on said screen by presenting parameter values which relate to different hierarchical levels within the same table, whereby the level indication rows include a parameter label for each column of said level indication row. In case the transformation is executed only for a subset of the two hierarchical levels, the transformation may be computationally cheap compared to transforming the complete hierarchical dataset into a table. The performance gain may be particularly advantageous in the context of a distributed electronic product information display system, because only data rows related to the at least two hierarchical levels need to be read from the database and be transferred - in the form of a hierarchical data-subset or in the form of a table structure, via a network. Also, as the table structure is created in memory, the creation may be performed very fast. Also, by identifying the maximum number of unique parameters assigned to data items contained in any one of the at least two hierarchical levels, and by creating as many columns as said identified number, a table can be created which does not comprise more columns than necessary. At the same time, the system is highly flexible: while most tree views used today only allow having a fixed number of columns, the dynamic determination of the number of columns in dependence on the number of unique parameters in each of the at least two hierarchical levels may allow for the displaying of product related information of arbitrary complexity at an arbitrary hierarchical level. Due to the ordering and grouping, the topological information contained in the hierarchical dataset is not lost. Nevertheless, the data content of the original hierarchical dataset may be displayed in a highly condensed form.

According to embodiments, parameters assigned to data items which act as parent nodes of two or more other ones of the data items are excluded from being represented as one of the columns. Such data items may also be referred to as "multi-child data items". Parameter values and parameter labels contained in such a "multi-child data item" are hidden in the table structure. The ordering is performed such that the grouped data rows directly succeed the one of the retrieved data rows comprising parameter values contained in a sibling node of said "multi-child data item" in the hierarchical dataset.
This may be advantageous, because using "hidden" multi-child data items may allow generating highly complex product hierarchies where parameter values may be grouped into related groups connected by a single parent node which is not displayed. Thus, it is possible to generate and transform highly complex hierarchical datasets without increasing the number of columns to be created in the table structure. For example, a first set of data items may comprise parameter values specified in English language while a second set of data items may comprise the same type of parameter values specified in German language. The "parent data item" of the first set of data items may be hidden and may not be represented as one of the columns. The "parent data item" of the second set of data items may also be hidden and may not be represented as one of the columns. Thus, the number of columns that is actually generated is reduced. The displayed information will still suffice to enable a user to derive the parameter to which a particular parameter value relates from the parameter label and the hierarchy level label.

According to embodiments, each level indication row includes a hierarchy level label and each data row includes a hierarchy level label. For example, said labels may be presented in the form of an additional column or in the form of a tooltip text or the like. This may be advantageous as the labels help to identify the hierarchical level a particular parameter value belongs to in cases where this is not easily derivable from the data content itself.

According to embodiments, the table structure includes one additional column comprising the hierarchy level labels. In addition, the format, e.g. the color or layout of the data rows of a particular hierarchical level may be identical or highly similar to the level indication row generated for representing said level, whereby different level indication rows may have different formats, e.g. different fonts, font-colors or background colors.

According to embodiments, the ordering and grouping of the data rows of each hierarchy level further includes calculating a least one parameter value dynamically. For example, the request may trigger, upon being received by the database, the execution of a stored procedure of the database. Said stored procedure is executed upon reading the hierarchical dataset from the database. For example, the stored procedure may be part of a database view. The stored procedure may calculate the at least one parameter value by summing up, multiplying or otherwise processing two or more data values.

According to some embodiments, the ordering can comprise ordering the already ordered and grouped data rows according to some rules. Said ordering may be a "secondary sorting" operation that does not violate the ordering and grouping schema of the "first order" grouping and ordering. The rules may specify, for example, that all adjacent data rows sharing the same hierarchical level and having been grouped together already due to a shared parent data item are sorted according to a parameter value in said data rows for a particular parameter, e.g. "weight", "amount", "size", "price", or the like. Using rules as secondary sorting criteria which preserve the groups of data rows having been generated in the grouping step may enhance and accelerate the reading of the presented data rows by a human.

According to embodiments, at least a first parameter value of a first one of the data rows and a second parameter value of a second one of the data rows are stored in the same one of the columns of the table structure, the first data row belonging to a different hierarchical level than the second data row, the first parameter value being of a different data type than the second parameter value.
This may be advantageous, because more data can be presented in a display of given, limited size than in state of the art product information display systems: while conventional tabular views and also database table schemas follow the concept that a particular column must only contain parameter values of the same data type (such as text or BLOB or integer or images or any other data type, the proposed table structure may comprise parameter values of different data types in the same column. Still, however, the topological information of the original hierarchical dataset is not lost due to the level-specific sorting and the labels being indicative of the hierarchical level each data row belongs to. In effect, more product related information can be displayed in a given, usually very limited display of a mobile telecommunication device (or a display device or an electronic label device) than when using conventional, tree-based information presentation approaches.

In a further beneficial aspect, the above described condensed form of information representation may reduce the energy consumption of the mobile telecommunication device and thus may extend the lifetime of the mobile telecommunication device's battery. As a single column may comprise parameter values relating to different hierarchical levels, more information can be displayed in a given screen area compared to using conventional tree-based or tabular information visualization approaches. As a consequence, less scrolling movements or even no scrolling movements are required for displaying to the user the relevant product related information.

According to embodiments, the transformation is performed such that all parameter values belonging to the same one of the at least two hierarchical levels and which are written to the same one of the columns of the table structure must share the same data type. Parameter values belonging to different ones of the at least two hierarchical levels and/or parameter values which are written to different ones of the columns are allowed to have different data types.
This may further reduce the energy consumption of the mobile telecommunication device, because a single column may comprise parameter values of different data types. Thus, more information can be displayed in a given screen area compared to using conventional tree-based or tabular information visualization approaches.

According to embodiments, the transformation engine is hosted on a server computer. The server computer is operatively coupled to the database and is connected to the mobile telecommunication device and to the display device via a network. The transformation engine is configured for receiving the request from the mobile telecommunication device via the network for reading the hierarchical dataset in response to the receiving of the request from the database and for returning the table structure to the mobile telecommunication device via the network. For example, the request may be received by a service hosted by a server-based software system on a server computer via a network in the form of a function call. The function call may be submitted by a client program running on the mobile telecommunication device of the user. This may further reduce the CPU load of the mobile telecommunication device, because the transformation process is already performed by the processor(s) of the server computer and the resulting table structure is communicated from the server computer to the mobile telecommunication device. In some embodiments, the table structure may be communicated in addition to the display device where it may be displayed in addition to the code. Providing the table structure both to the mobile telecommunication device as well as to the display device may be advantageous, because also users lacking a mobile device may be enabled to perceive the information contained in the table structure and users owning a mobile device may use the received table structure of products of interest in order to store relevant product information on their mobile telecommunication devices for later use.

According to embodiments, the transformation engine is hosted on the mobile telecommunication device. The mobile telecommunication device is operatively coupled to the database and is connected to the display device via a network. The transformation engine is configured for reading the hierarchical dataset via the network and for returning the table structure to the mobile telecommunication device via the network. Said embodiments may provide the benefit that the mobile telecommunication device may be enabled to transform hierarchical data provided by databases which lack a transformation engine, also. Thus, the system may be usable for many different product information display systems and respective databases.

According to embodiments, the product information display system further comprises an electronic label device. The electronic label device comprises a display and is assigned to at least a further one of the plurality of products. The transformation engine is hosted on a server computer. According to some embodiments, a further instance of the transformation engine may be hosted on the electronic label device. The display device and the electronic label device are operatively coupled to the database via a network. The transformation engine is configured for reading the hierarchical dataset from the database and for returning the table structure to the mobile telecommunication device and/or to the electronic label device via the network. The electronic label device is configured for receiving the table structure from the transformation engine and for displaying the received table structure on the display of the electronic label device.

According to embodiments, the request comprises an indication of the at least two of the multiple hierarchical levels. Only the at least two hierarchical levels indicated in the request are represented by respective ones of the level indication rows and only data rows which belong to said at least two indicated hierarchical levels are read from the database and are written to the table structure. This may reduce network traffic and increase the speed of information transformation and display, because only data related to the at least two hierarchical levels specified in the request is read from the database and transferred via the network. Thus, the memory accessed by the transformation engine may act as a level-specific cache where only a subset of the available product related data is stored that belongs to the two or more hierarchical levels that shall be displayed.

According to embodiments, the mobile telecommunication device is configured for automatically measuring a network bandwidth of a network connection, the network connection connecting the mobile telecommunication device to the database from which the hierarchical dataset is retrieved. The mobile telecommunication device may then automatically calculate the number of hierarchical levels for which data rows shall be retrieved and transformed into a table structure. Said number positively correlates with the measured network bandwidth. For example, in case the measured network bandwidth is below a threshold value, the calculated number may be "3" or only "2", while in case the measured network bandwidth is above said threshold value, the calculated number may be "4" or even more. The calculated number is included in the request in order to indicate the number of hierarchical levels for which data rows shall be retrieved.

According to embodiments, the transformation engine is further configured for formatting the table structure according to a defined schema and for sending, to the requestor via the network, the encoded table structure. The schema may be, for example, an extensible markup language schema such as HTML.

According to embodiments, the mobile telecommunication device hosts a client application. The client application is configured for:
- receiving a description of the hierarchical dataset from the database, said description lacking the data rows to be retrieved for the hierarchical levels of the hierarchical dataset;
- displaying the received description via the display of the mobile telecommunication device to the user via a user interface view generated by the client application for enabling the user to select the at least two of the multiple hierarchical levels;
- receiving a user input-action by the mobile telecommunication device, the user input action being indicative of the at least two of the plurality of hierarchical levels selected by the user; and
- including an indication of the selected at least two hierarchical levels in the request.
This may be advantageous, because the description does not comprise the totality of data records of the hierarchical dataset and therefore may be communicated via the network quickly.

Some embodiments include aggregating the hierarchical dataset, as it may be stored in several rows of each of one to many tables or other similar data storage structures, grouping data according to the hierarchy, and writing the data in hierarchical groups to a table structure.
According to embodiments, the data of the table structure is written in a descending manner from a highest level to a lowest level. For example, a highest data row may be written followed by a next lower level data row of the hierarchy, and then each of the lowest level data rows at that point of in the hierarchy where such lowest level data rows are dependent upon the immediately previous data row written to the table structure. This may continue until all data rows assigned to any of the at least two hierarchical levels are written to the table structure or at least until a viewable portion of a user interface is fully utilized in presenting data. In such embodiments, upon a user interface resizing event or a scrolling event, further table structure rows may be retrieved, ordered, grouped and displayed.

According to embodiments, the displaying of the table structure includes:
- determining a width of a display area within which the table structure is to be displayed; and
- generating a view of the table structure in the form of a table, wherein:
   o the table has a width no greater than the width of the display area;
   o a width of each column of said table is automatically chosen such that a sum of column widths is equal to the table width;
   o text being representative of the parameter represented by each of said columns in each of the level indication rows is placed in said column of said level indication row;
   o when one of the text representations has a width greater than a width of the column, the text is wrapped such that the entirety of the text is presented in said column; and
   o scaling a height of each row according to a greatest height of text to be presented in columns of the respective data-row or level indication row.

In a further aspect, the invention relates to a computer-implemented method. The method comprises: receiving a hierarchical dataset from a database, the hierarchical dataset comprising product-related information, the hierarchical dataset including multiple hierarchy levels. Each hierarchical level comprises one or more data items. Each data item has assigned a parameter. At least some of the data items comprise a parameter value of the respectively assigned parameter. The method further comprises transforming the received hierarchical dataset into a table structure. The transformation comprises building the table structure in memory. The building of the table structure comprises:
- representing each of at least two of the multiple hierarchy levels as a level indication row, the table structure including a level indication area, the level indication area including the level indication rows;
- creating columns of the table structure by identifying the one of the at least two hierarchical levels which comprises a maximum number of data items having assigned a parameter that is unique within the data items of said hierarchical level and by representing each unique parameter being assigned to a data item of the identified hierarchical level as a column of the table structure, each of the level indication rows including a parameter label for each column of said level indication row;
- writing the level indication rows in the memory;
- retrieving, into the memory from the database, one or more data rows for each of the at least two hierarchy levels, whereby each data row selectively comprises parameter values which are contained in data items which belong to said hierarchical level;
- ordering and grouping the retrieved data rows, whereby the grouping is performed such that all data rows having been retrieved for a particular hierarchical level and which share, in the hierarchical dataset, the same data item as their parent node, are grouped together, and whereby the ordering is performed such that said grouped data rows directly succeed the one of the retrieved data rows which comprises a parameter value which is contained in said parent node and/or which is contained in a sibling node of said parent node in the hierarchical dataset;
- writing the ordered and grouped data rows of each of the at least two hierarchy levels to the table structure in the memory.

According to embodiments, the method is executed by a transformation engine. The transformation engine may be hosted, for example, on a server computer, on the mobile telecommunication device and/or on the display device as described for embodiments of the above mentioned electronic product information display system.

According to embodiments, the method is performed by a transformation engine hosted by a server computer and further comprises: receiving a request from a client application of a mobile telecommunication device via a network. The request comprises an identifier of the at least one product for which product related information shall be retrieved and optionally comprises in addition an indication of the at least two levels to be represented by a respective level indication row; the table structure is returned by the transformation engine to the client application via the network.

In a further aspect, the invention relates to a non-transitory computer-readable medium, with instructions stored thereon, which when executed by at least one processor of a computing device, cause the computing device to perform a method according to any one of the above embodiments.

A "display device" as used herein is an electronic module with a display that is assigned to one or more products and that is used for displaying information related to said assigned one or more products to a customer. For example, a display device may be mounted at locations proximate to respective products. A display device may comprise means for receiving information related to its assigned products. For example, a display device may comprise an interface to a remote product information database and may be configured for receiving and displaying information related to its assigned products on its display. The assignment of the display device and the one or more products may be modifiable, e.g. by replacing the products at the locations proximate to the display device by other products and by reconfiguring the display device such that information related to said other products is received and displayed. The information displayed by the display device may be an identifier of said assigned one or more products, whereby the identifier may be encoded, e.g. in the form of a QR code. Alternatively, a combination of said code and a table structure described for embodiments of this invention may be displayed. According to embodiments, the display device may comprise an RFID interface enabling a mobile telecommunication device to read the code from the display device via the RFID interface. Thus, the function of a display device is the displaying of a code for enabling a user to read said code with his or her mobile telecommunication device (e.g. via a camera or an RFID interface of said mobile device). In addition, it may be used for displaying human-readable product related information, e.g. a product description.

In some embodiments, a display device is programmed with a device-address and the product information database comprises an assignment of display devices and their respective products. The product related information, e.g. the product identifiers and/or the codes comprising the product identifiers of a particular product may be transferred from the product information database selectively to the display device assigned to said particular product. The transfer may be implemented as a push- or a pull- approach.

In some embodiments, a display device comprises a battery as an energy source.

A "table structure" as used herein is a data structure acting as a container for storing data in cells, each cell belonging to a particular row and column. A table structure may easily be modified, e.g. added with appropriate tags, for displaying the parameter values contained in said data structure in the form of a matrix or a table. According to embodiments, the table structure may already comprise said additional information for providing a table view. For example, the table structure could be a HTML table comprising <tr> and <td> tags.

A "hierarchical dataset" is data that is organized and/or stored hierarchically, e.g. is stored in the form of a hierarchical tree structure, the tree comprising nodes, herein also referred to as "data items", which are connected by edges. The hierarchy of the hierarchical dataset comprises two or more hierarchical levels.

A "data item" as used herein is a node within a hierarchical dataset. Some of the data items may represent a particular product or may represent a particular component or feature of said product or product component. Each data item may represent at least one parameter and may have assigned one or more parameter values for said parameter. The parameter values may be indicative of some features of said product or product component, e.g. the color, the price, the product label in a particular language, a media file, a product weight, a product dimension, or the like.

A data row as used herein is a row within a data area of the table structure that comprises parameter values for one or more parameters assigned to a particular hierarchical level and being related to a particular product, product component or feature of said product or product component.

A "level indication row" is a row within a level indication area of the table structure that represents a hierarchical level of the data structure and may comprise one or more parameter labels. However, a level indication row, contrary to a data row, may be free of any information related to a particular product instance.

A "product" is a physical entity, e.g. a vehicle, a toy, a consumer good, production material or the like for which information is available that shall be presented to a human being.

A "product information display system" is a system that comprises at least one display and some data processing logic for presenting information related to said product in a human-readable form to a user.

An "electronic label device" as used herein is a display device which is configured to solely display human-readable product related information. Thus, the function of an electronic label device is not to display a machine-readable code, but rather to display information such as a price, a product description, special sale conditions, and the like. According to embodiments, the electronic label device is capable of performing a scrolling movement of the displayed data content in response to a user action. For example, the display of the electronic label device is a touch-sensitive display and the user action is a swiping gesture over the surface of the display, a pressing of the display, or the like.

A "telecommunication device" as used herein is a device that is able to transmit telephonic, electronic, digital, cellular, or radio communications via a network to another device. A mobile telecommunication device may be, for example and without limitation, a mobile phone, in particular a smart phone, a tabloid computer, or the like.

A "network" as used herein is a collection of devices, links and processors which connect together so that communications can be made. The network may be, for example, the Internet. The network may comprise or be linked to a "digital cellular wireless telecommunication network" that provides services by using a large number of base stations, each covering only a limited area. Said wireless telecommunication network may allow a number of mobile telecommunication devices to communicate with each other and with other devices and server computers anywhere in the network. For example, the cellular network may use Global Systems for Mobile Communication (GSM), Code Division Multiple Access (CDMA) or other technologies.

A "memory" as used herein is a computer-readable medium for storing data at least temporarily to make it available to a central processing unit. The data may comprise program instructions and payload data. In particular, the memory may be a main memory, e.g. the main memory of a data processing device that hosts the transformation engine. Said data processing device may be a server, e.g. a database server, the mobile telecommunication device, the display device or the electronic label device. The memory may be RAM ("random access memory").

### Brief description of the drawings

In the following embodiments of the invention are explained in greater detail, by way of example only, making reference to the drawings in which:
- FIG. 1: is a logical block diagram of a product information display system, according to an example embodiment.
- FIG. 2: illustrates a hierarchical dataset, according to an example embodiment.
- FIG. 3: is a logical block diagram of a product information display system, according to an example embodiment.
- FIG. 4: illustrates a table-form presentation of hierarchical data, according to an example embodiment.
- FIG. 5: is a block flow diagram of a method, according to an example embodiment.
- FIG. 6: is a block flow diagram of a method, according to an example embodiment.
- FIG. 7: is a block diagram of a computing device, according to an example embodiment.

### Detailed description

Various embodiments illustrated and described herein each include at least one of product information display systems, methods, and software for table-form presentation of hierarchical data.

Various embodiments may be implemented as a distributed product information display system. Other embodiments may be implemented as server-side computer implemented method for transforming the hierarchical dataset. Said method may be called as a function or service of a larger data processing system, such as an enterprise resource planning (ERP) system, customer relationship management system (CRM), a data visualization system, and the like. For example, the database comprising the product information may be part of an ERP system.
Other embodiments may be implemented in whole or in part in client-side computer implemented method, such as may be included with a thin or thick client application or app of a mobile telecommunication device which may comprise an instance of the transformation engine. The hierarchical dataset may be provided by a web service, a remote function, or another element that may receive a hierarchical dataset via a network and will generate and return the table structure for a table-form presentation of the hierarchical dataset. These and other embodiments are described herein with reference to the figures.

In the following detailed description, reference is made to the accompanying drawings that form a part hereof, and in which is shown by way of illustration specific embodiments in which the inventive subject matter may be practiced.

The functions or algorithms described herein are implemented in hardware, software or a combination of software and hardware in one embodiment. The software comprises computer executable instructions stored on computer readable media such as memory or other type of storage devices. Further, described functions may correspond to modules, which may be software, hardware, firmware, or any combination thereof. Multiple functions are performed in one or more modules as desired, and the embodiments described are merely examples. The software is executed on a digital signal processor, ASIC, microprocessor, or other type of processor operating on a system, such as a personal computer, server, a router, or other device capable of processing data including network interconnection devices.
Some embodiments implement the functions in two or more specific interconnected hardware modules or devices with related control and data signals communicated between and through the modules, or as portions of an application-specific integrated circuit. Thus, the exemplary process flow is applicable to software, firmware, and hardware implementations.

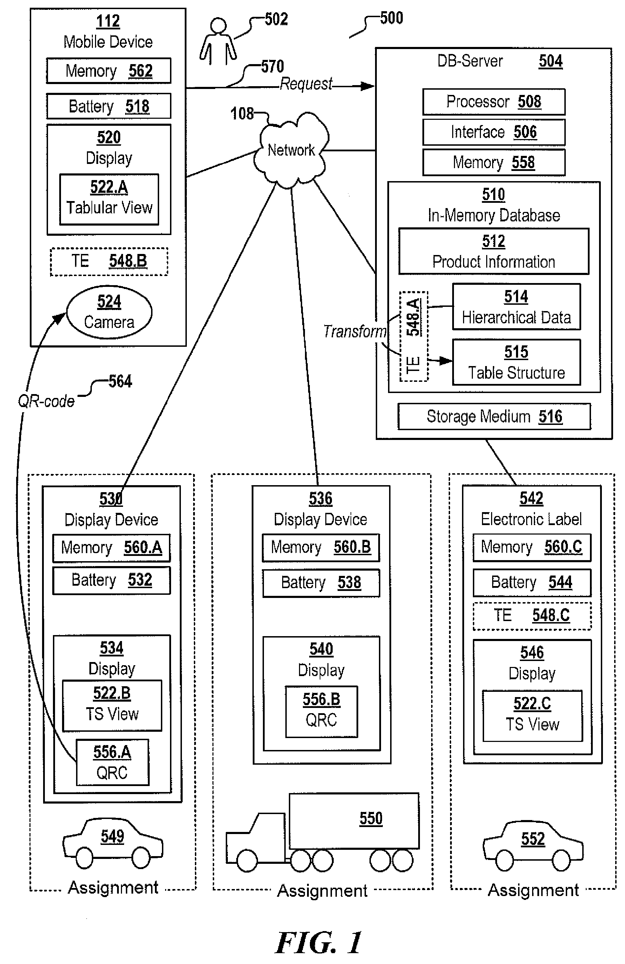

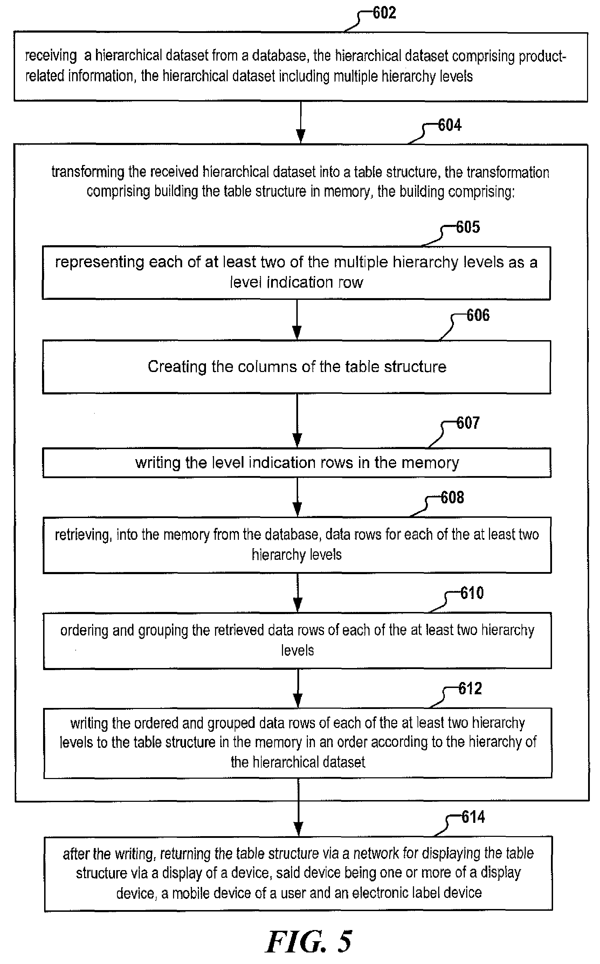

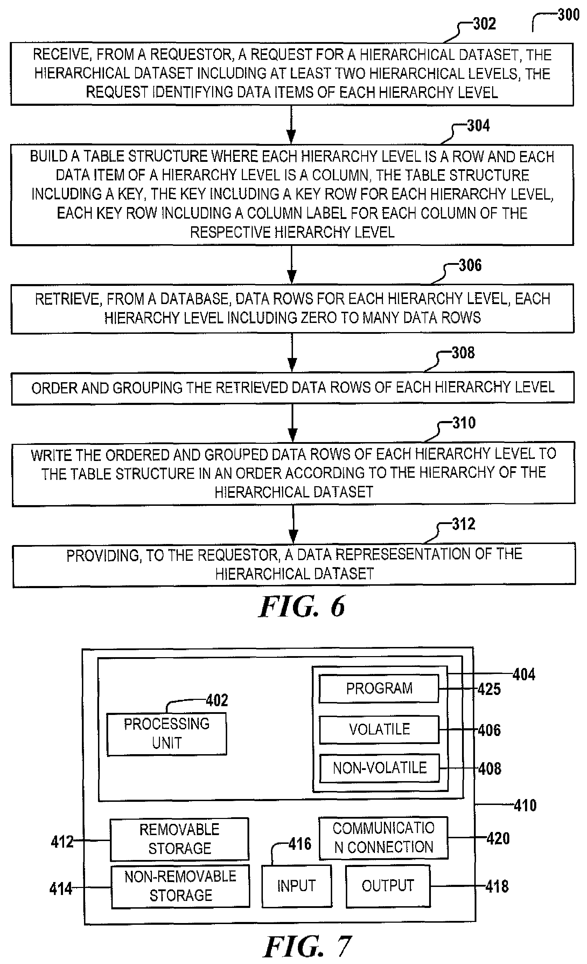

**FIG. 1** is a logical block diagram of a product information display system 500, according to an example embodiment. The product information display system or components thereof may be configured for executing a method as depicted in FIGs. 5 or 6.

The product information display system 500 comprises a mobile telecommunication device 112, e.g. a battery-powered 518 smart phone, of a user 502. The mobile telecommunication device comprises a camera 524 and/or an RFID interface for automatically reading a code 556.A, 556.B displayed on a screen 534, 540 of a display device 530, 536. The read code is evaluated by the mobile telecommunication device 112 and one or more product identifiers of products 548, 550 having been assigned to respective display devices 530, 536 are extracted. In the product information display system depicted in figure 1, product 548, e.g. a toy car, is assigned to a display device 530. Another product, e.g. a toy truck, is assigned to display device 536, e.g. by spatial proximity.

The ID-extraction and the reading of the code may be performed by a client application installed on the mobile device which may be interoperable with a server application running on a database server 504 hosting a database 510.

The database 510 may comprise product -related information, for example the price, the manufacturer, a model number, a model description, the dimensions, whereby the product related information may be available in multiple languages.
The system 500 may comprise multiple different display devices 530, 536, whereby the display devices may be of the same or of a different device type or may be configured differently. For example, the display device 536 is configured for solely presenting the code 556.B, e.g. a QR-code, on its screen 540. The display device 530, however, may be configured for presenting the code 556.A, e.g. a QR-code, in combination with a table structure, whereby the table structure comprises information related to the one or more products identified by the one or more identifiers encoded in said code 556.A on its screen 530. According to some embodiments, the display devices 530, 536 comprise an internal energy source, e.g. a battery 532, 538.

The display devices 530, 536 are connected to a database 510 via a network 108, e.g. the Internet. The mobile telecommunication device 112 may be connected to the database via a mobile telecommunication network connection. The database may be implemented as an in-memory database such as, for example, SAP Hana. The database 510 may be hosted by a database server 504 comprising an interface 506, e.g. a web service interface, for receiving a request 570 from the mobile telecommunication device 112 via the network 108.
The database 510 comprising product -related information 512 may be hosted by a database server 504 comprising one or more processors 508, a main memory 558 and the interface 506 for receiving a request 570 from the mobile device 112. The product related information 512 is stored or is dynamically extracted from the database 510 in the form of a hierarchical dataset 514.

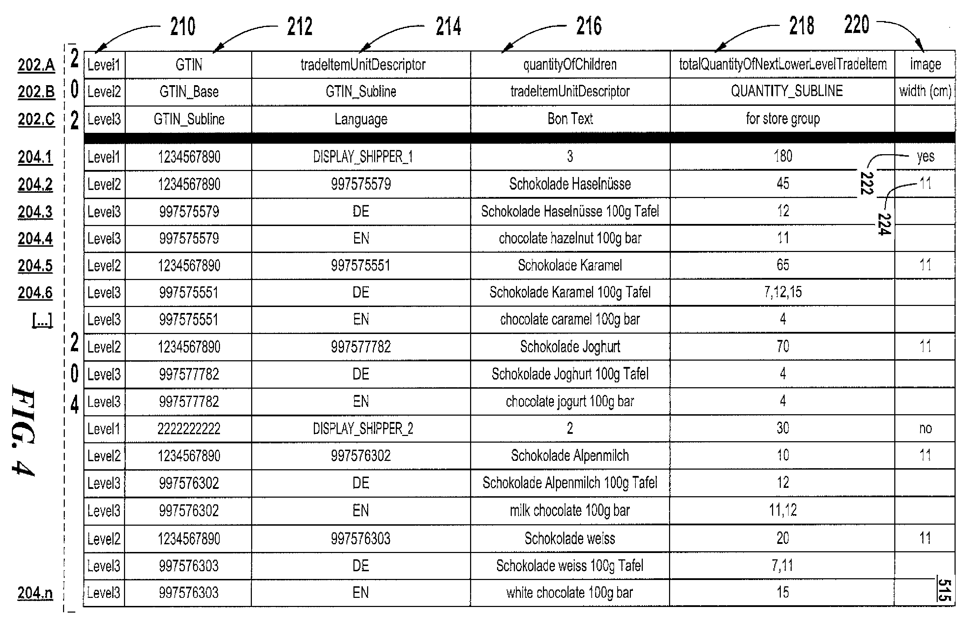

The product information display system 500 comprises one or more transformation engines 548. A transformation engine is a software-, firmware-and/or hardwarebased program logic being configured for transforming the hierarchical dataset 514 into a table structure 515 as described for embodiments of the invention and as depicted, for example, in figure 4.
For example, the database server 504 may have been stored the transformation engine 548.A as a server-side program module or service. The transformation engine 548.A may receive the request 570 from the mobile device, extract information related to the one or more products identified in the request 570 in the form of a hierarchical dataset, automatically transformed the extracted hierarchical dataset into the table structure 515 and return the table structure to the requesting mobile device 112 via the network 108. Alternatively, or in addition, the mobile device may host an instance of the transformation engine 548.B. In this embodiment, the extracted hierarchical dataset 514 may be returned via the network 108 to the transformation engine 548.B of the mobile device 112. The transformation engine 548 start be would transform the received hierarchical dataset into the table structure. The table structure is finally displayed on the display screen 520 of the mobile device 112 to the user 502. Displaying product related information on the mobile device instead of or in addition to presenting that information on a display device may have the advantage that the distance of the screen of a mobile device and the eyes of a user 502 is usually smaller than the distance of a screen of a display device attached to a product and the eyes of a user. Thus, smaller font-and symbol sizes may be used for presenting text contained in the table structure and more information can be displayed on a given screen size.

In addition, the table structure 515 may be sent to a display device 530 where it is presented on a display screen 534 of said display device in addition to the code 556.A. the table structure may be presented in the form of a table structure view 522.B. The table structure may be sent in response to the request or independently of the request. For example, the table structure may be sent automatically upon events such as the installation of a display device 530, the assignment of one or more products 549 to a display device 530, an update of the database 510 or the like.

In some embodiments, the hierarchical data 514 is sent to the display device 530 via the network. In this case, the display device also comprises a transformation engine (not shown). In order to save battery power, the transformation is performed, however, preferentially by the database server 504 or another server operatively coupled to said database server.

According to some embodiments, the product information display system 500 further comprises one or more electronic label devices 542. An electronic label device comprises a main memory 560.C, an internal energy source such as the battery 544 and may optionally comprise a transformation engine 548.C or receive the already transformed table structure 515 directly from the database server. The electronic label device comprises a display 546 for displaying a view 522.C of the table structure 515. The electronic label 542 may differ from a display device merely by that it may solely display the table structure 515 in a human readable form and may not display any machine-readable code 556.

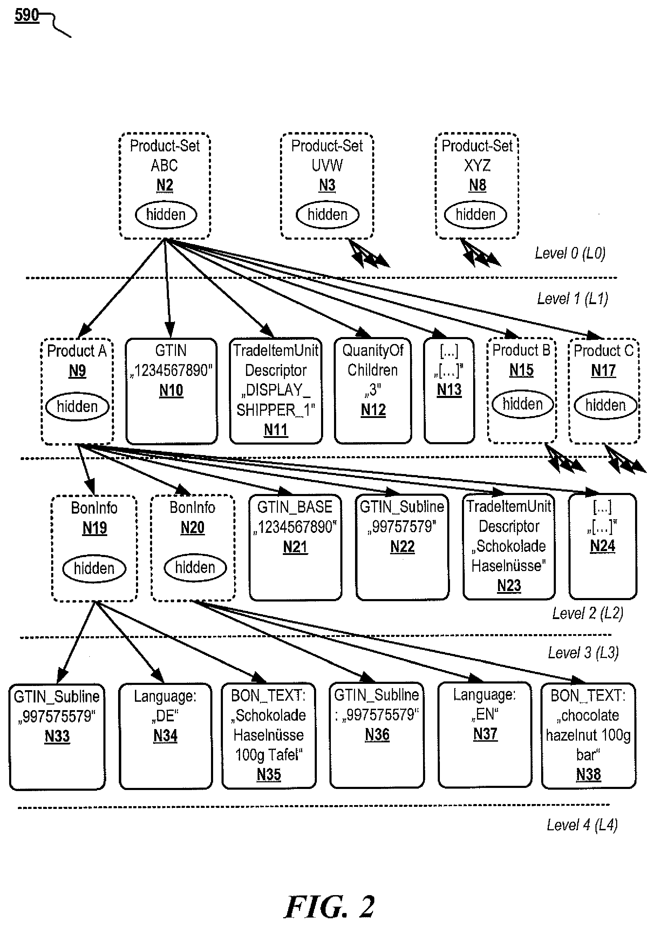

**FIG. 2** illustrates a hierarchical dataset, according to an example embodiment. The hierarchical dataset 590 may comprise multiple levels L1-L4. Each level may comprise one or more data items, e.g. data items N2, N3 and N8 for level L0, data items N9-N17 for level L2, data items N19-N24 for level L3 and data items N33-N38 for level L4. The hierarchical dataset may be stored as hierarchical graph, e.g. a tree, and each data item may be a node of said tree. For space reasons, not all data items of each level are shown.

For example, the hierarchical level L0 may comprise data items respectively representing a "product set". Each of the data items N2, N3 and N8 have assigned the parameter "Product Set". Data item N2 comprises the parameter value "ABC" for said parameter. Data item N3 comprises "UVW" as a parameter value for the parameter "Product Set" and data item N5 comprises the parameter value "XYZ" for said parameter. A product set may be a set of products to be sold to a customer together. Product set represented by Node N2 "ABC" may consist of three individual products "A", "B" and "C" respectively represented by data items ("nodes") N9, N15 and N17. Information related to product set ABC such as GTIN for the set, the number of child nodes (individual products), the TradeltemUnitDescriptor and the like may be connected to the product set ABC by means of multiple data items N10-N13 acting as child nodes of node N2. Said child nodes N10-N13 have assigned respective parameters "GTIN", "TradeltemUnitDescriptor", "QuanittyOfChildren" and comprise the respective parameter values which give some additional information on Product Set "ABC". The details for a particular data item may be specified in direct and indirect child nodes. For example, the details of product "A" corresponding to data item N9 may be contained in the direct child nodes N19-N24 of node N9 and in the indirect child nodes N33-N38 of node N9. The details for the other product sets "UVW" and "XYZ" and for the other products "B" and "C" of product set "ABC" are not displayed for space reasons. The term "node" and "data item" will be used as synonyms in the description of figures 2-7. In one or more of the hierarchical levels, there may exist one or more data items having assigned the same parameter, but comprising different parameter values. For example, nodes N34 and N N36 respectively have assigned the parameter "Language", but have assigned different parameter values "DE" and "EN". Thus, when the number of unique parameters per hierarchical level is determined for determining the number of columns of the table structure to be created, the parameter "language" is represented by exactly one column for level L3, and an arbitrary number of data items N34, N36, N* having assigned said parameter "language" will only be represented as a single column. If all data items of a hierarchical level have assigned unique parameters (within said hierarchical level), and if said hierarchical level comprises the maximum number of unique parameters of all hierarchical levels for which data rows shall be retrieved, each of said data items and their respectively assigned unique parameter would be represented by a respective column. The data items of the same hierarchical level may have different data types, and it is even possible that data values within the same column but of different hierarchical levels have different data types, e.g. BLOB (binary object), IMAGE, TEXT, WAF, MPG4, or the like.

According to some embodiments and in the depicted example, at least some N2, N3, N8, N9, N19, N20 of the data items which have multiple child nodes are hidden and may not be considered in a transformation step for automatically calculating the number of columns of the table structure to be generated. For example, data item N19 may belong to the second hierarchical level L2 and may represent the parameter "Bonlnfo", Data item N19 has three child nodes N33, N34 and N35 of level L3, the child nodes respectively comprising a parameter value to be presented on a bon text in a particular language, e.g. German. Data item N20 has three child nodes N36, N37 and N38 of level L3, the child nodes respectively comprising a parameter value to be presented on a bon text in a particular language, e.g. English. Some of said example parameter values are also described in the example embodiment of Fig. 4. Fig. 4 may be considered as a transformation result of the hierarchical dataset of Fig. 2, whereby Fig. 2 does not show the complete hierarchical dataset for space reasons, and Fig. 4 shows only a subset of the information presented in Fig. 2 and shows only a subset of the available hierarchical levels L0-L4, e.g. because a request may have contained an indication of levels L1-L3 only.

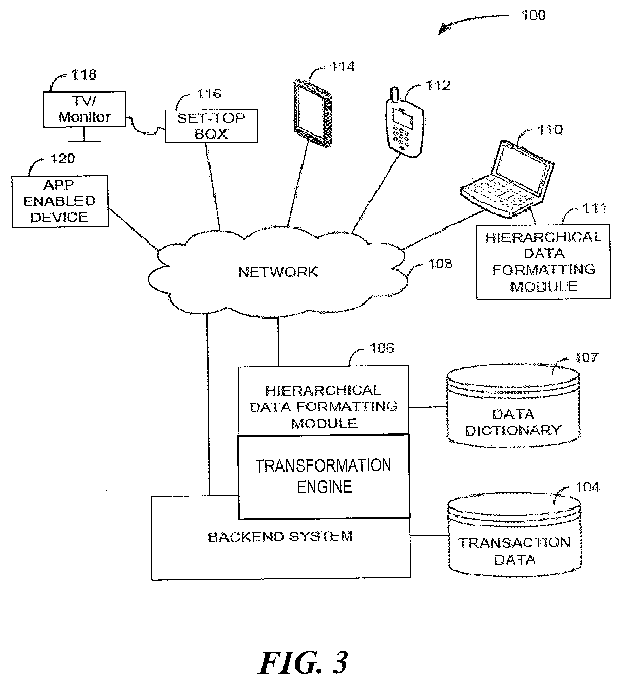

**FIG. 3** is a logical block diagram of another product information display system 100, according to an example embodiment. The system 100 is an example computing environment within which various embodiments may be implemented.
The system 100 includes a backend system 102 of an enterprise, such as one or more of an enterprise resource planning (ERP), customer relationship management (CRM), human resources management (HRM), a transaction processing system, a customer retail system such as may provide multiple data views of various products offered by an enterprise, an order and order processing system, a banking system, and the like.

The backend system 102 stores and processes product related transaction data 104 as may be stored in a database, data files, and other data storage processes and devices. Some of this data as stored by the backend system102 may be hierarchical in nature and spread across numerous tables. For example, there may be a manufacturer table providing data of many different manufactures. There may be a product table where data of products is stored and each product includes an association to a manufacturer table row. Additionally, each product may also be associated with one or more distributor or retailer data rows. Thus, data stored by the backend system 102 may be hierarchical in nature. The topology of the hierarchy may be specified, for example, in the form of a hierarchically organized ontology or data dictionary 107.

The backend system 102 may be deployed to one or more computing devices, such as one or more enterprise-class server computers, virtual machines, and the like. The backend system 102 may be accessed by other systems and programs that execute and various computing devices throughout the system 100. For example, the backend system 102 may be accessed via a network 108 by thick-client or thinclient applications as may be deployed to personal computers 110, by other software systems, and other clients, in particular mobile telecommunication devices such as smartphones. The backend system 102 may also be accessed by a transformation engine 106, also referred herein as "hierarchical data formatting module" 106, either directly or via the network 108. The transformation engine 106 of such embodiments is a module that may be a part of the backend system 102 or be an add-on module thereto.

The transformation engine 106 operates in the networked environment of the system 100 between the backend system 102 and devices 112, 114, 116, 120 of users and apps deployed thereto. However, in some embodiments, the transformation engine 106 may also operate with web browser apps as may be deployed to web browser applications of personal computers 110 and other computing devices or directly or indirectly with web browser applications as may be deployed to one or more of the computer 110 and devices 112, 114, 116, 120.

The transformation engine 106 in some such embodiments communicates with processes of the backend system 102 or a database 510, such as a database of transaction data and/or static product related data, to obtain hierarchical datasets upon request from apps that execute on mobile telecommunication devices 112, 114, 116, 120, web browser apps that execute within web browsers, or directly from web browsers.

The transformation engine 106 may be deployed as an add-on module to the backend system 102 and operate on the same or different hardware thereof, in some embodiments. However, in other embodiments, the transformation engine 106 may be deployed as a standalone program that executes on one or more distinct computing devices or virtual machines from the backend system 102. In some embodiments, the transformation engine 106 is hosted by a third party, such as in a cloud-computing type arrangement.

The network 108 is generally a network capable of transporting data between computing devices of the various functional data processing elements of the system 100, such as the backend system 102, the transformation engine 106, personal computers 110 and the various mobile telecommunication devices 112, 114, 116, 120. The network 108 may include both wired and wireless connections. The network 108 is intended to represent one or more of virtually any type of network capable of transporting data as described, such as one or more of a local area network, a wide area network, a system area network, a value added network, a virtual private network, the Internet, and other such networks.

**FIG. 4** illustrates a table-form presentation of hierarchical data, according to an example embodiment. The illustrated table 515 is an example of how hierarchical data may be presented in a table-form, according to some embodiments.

As illustrated, the table includes a level indication area 202, also referred herein as "key area" 202 and a data area 204. The table structure includes six columns 210, 212, 214, 216, 218, 220. The key area 202 identifies what the columns 210, 212, 214, 216, 218, 220 of each data row represented. The column 210 is a level indicator column (indicating the level a particular data row belongs to, e.g. Level1, Level2, Level3). The data rows 204.1-204.n in the data area 204 are of a level as indicated in this column 210. The parameter values in the data area 204 relate to parameters identified in the column name in the level indication rows of the respective hierarchical level of the particular data row. Thus, where column 210 of a data row in the data area 204 equals "Level1", the parameter values stored in subsequent columns 212, 214, 216, 218, 220 of said data row are parameter values of parameters ("GTIN", "tradeItemUnitDescriptor", etc). The parameter to which said parameter values refer to are indicated by the text in a cell that belongs to said particular column and that belongs to a level indication row representing the same level as said data row. For example, for data rows having the level "Level1 ", the level indication row 202.A comprises the relevant column names which may act as parameter labels. For example, the cell contained in data row 204.4 and column 216 comprises the parameter value "chocolate hazelnut 100g bar". That said parameter value relates to the parameter "Bon text" can be derived by identifying the text in a cell of the level indication area which belongs to the same column 216 as the parameter value "chocolate hazelnut 100g bar" and that is indicative of the same hierarchical level ("Level3") as the level label assigned to data row 204.4. Thus, large hierarchical datasets can be presented in such a table to illustrate the hierarchical relationships between data in a manner that accommodates varying data types between hierarchy levels and that is capable of presenting a large amount of information on a display of very limited size, thereby reducing the necessity for scrolling movements or even rendering scrolling completely unnecessary.

**FIG. 5** is a block flow diagram of a method that may be executed by a transformation engine 106, 548 that will be described in the following by making reference to the components of figure 1.

In a step 602, the transformation engine (TE) receives a hierarchical dataset 514, 590. The hierarchical dataset such as depicted, for example, in Fig. 2, comprises product-related information, e.g. in the form of parameter values stored in data items having assigned a particular parameter. The hierarchical dataset includes multiple hierarchy levels L0-L4 and each hierarchical level may comprise one or more data items. At least some of the data items comprise a parameter value of the respectively assigned parameter. For example, the TE may receive a request from a client application, access a database in response to request, and extract the hierarchical dataset from the data stored in the database. The hierarchical topology may be specified by means of primary and secondary keys which interconnect multiple tables of the database. Alternatively, the TE may read an existing hierarchical dataset directly from a storage or memory. For example, the hierarchical dataset may be an XML file or another file that specifies a hierarchical data structure, e.g. a tree.
In a next step 604, the TE transforms the received hierarchical dataset into a table structure 515. The transformation comprises building the table structure in memory 558, 560, 562. If the TE is hosted on a database server or other backend server operatively connected to the source database comprising the hierarchical dataset, the table structure may be built in the memory of said server, and the transformation result is returned to the client. If the TE is hosted on a client device, e.g. the mobile telecommunication device, a display device or an electronic label device, the table structure may be built in the memory of said client device, and the input for the transformation, i.e., the hierarchical dataset, is received by the TE via the network.

The building of the table structure comprises multiple steps:
In a step 605, the TE represents each of at least two L1-L3 of the multiple hierarchy levels as a level indication row 202.A, 202.B, 202.C. The number of the at least two levels L1-L3 may be determined by the client device or by the TE dynamically, e.g. by evaluating a current network bandwidth of a network connection to a server having stored the hierarchical dataset. The table structure includes a level indication area 202, the level indication area including the level indication rows 202.A, 202.B, 202.C;
In step 606, the TE creates columns 212-220 of the table structure. This is achieved by identifying the one of the at least two hierarchical levels which comprises a maximum number of data items having assigned a parameter that is unique within the data items of said hierarchical level and by representing each unique parameter being assigned to a data item of the identified hierarchical level as a column 212-220 of the table structure. Each of the level indication rows includes a parameter label for each column 212-220 of said level indication row. For example, by making reference to Fig. 2, the TE may determine a "first number", the first number being indicative of the number of unique parameters contained in data items N10, N11, N12, N13, [...], N15 and N17 for level L1. N9 may be a multi-child node and may therefore be ignored. The TE may determine a "second number", the second number being indicative of the number of unique parameters contained in data items N21, N22, N23, N24 and a plurality of data items (not shown) being child nodes of N15 and N17 for level L2. N19 and N20 may be multi-child nodes and may therefore be ignored. Also, parameters which are assigned to multiple nodes within level L2 are counted only once. For example, the parameter GTIN_BASE of node N21 is counted only once, although also child nodes of N15 and N17 may have assigned the same parameter GTIN_BASE. The TE may determine a "third number", the third number being indicative of the number of unique parameters contained in data items N33, N34, N35, N36, N37, N38 and a plurality of data items (not shown) being child nodes of hidden "Bonlnfo" data items of products "B" and "C" for level L3. Parameters which are assigned to multiple nodes within level L3 are counted only once. For example, the parameter "Language" of node N34 is counted only once, although also Node N37 has assigned the same parameter. The maximum number of the first number, the second number and the third number is used as the number of columns to be created, and the names of the parameters which were represented as a column of a particular level may be used as parameter label. For example, the cells in the level indication rows may comprise the names of the respectively represented parameter as the parameter label.
In step 607, the TE writes the level indication rows in the memory.
In step 608, the TE retrieves, into the memory from the database 510, one or more data rows 204.1-204.n for each of the at least two hierarchy levels. Each data row 204.3 selectively comprises parameter values which are contained in data items N33, N34, N35 which belong to said hierarchical level L3.
In step 610, the TE orders and groups the retrieved data rows. The grouping is performed such that all data rows having been retrieved for a particular hierarchical level L3 and which share, in the hierarchical dataset, the same data item N19 as their parent node, are grouped together. The ordering is performed such that said grouped data rows 204.3, 204.4 directly succeed the one 204.2 of the retrieved data rows which comprises a parameter value which is contained in said parent node N19 and/or which is contained in a sibling node N21 of said parent node in the hierarchical dataset (the parent node may be a multi-child node and may therefore be hidden in some embodiments).
In step 612 the TE writes the ordered and grouped data rows of each of the at least two hierarchy levels to the table structure in the memory. This means, that the data rows are written in an order according to the above described grouping and ordering and preferentially also according to the sequence of hierarchical levels in the hierarchical dataset. For example, the first data row 204.1 of the table structure may comprise parameter values contained in data items N10, N11, N12 ... of the first hierarchical level. Then, the next data row 204.2 may comprise parameter values contained in data items N21, N22, N23 ... of the second hierarchical level L2 sharing data item N9 as parent node.
In step 614, after the writing, the TE may return the table structure 514 for displaying the table structure via a display 520, 534, 540, 546 of a device. Said device can be, for example, a mobile telecommunication device 112 of a user, an electronic label device 542, a display device 536, 530 or the like. The method may in addition comprise a step of displaying the table structure by one or more of said devices 112, 542, 536, 530.

**FIG. 6** is a block flow diagram of a method 300, according to an example embodiment. The method 300 is an example of a method that may be performed by a transformation engine 106, 548, such as depicted in figure 1 and 3. The transformation engine may be deployed on a network, as an add-on module to a larger software system, as a web-service, as part of a client app or application, or in other forms.

In some embodiments, the method 300 includes receiving 302, from a requestor 112, such as a client app or application via a network 108, a request 570 for a hierarchical dataset. The requested hierarchical dataset generally includes at least two hierarchy levels and the received 302 request identifies data items of each hierarchy level. The method 300 further includes building 304, in memory of a computing device such as a server 504 or client computing device 112, 530, 536, 542 performing the method 300, a table structure where each hierarchy level is a row in a level indication area 202 and each data item of a hierarchy level is a column. The table structure built in step 304 also typically includes a level indication area 202, also referred to as "key area", having a level indication row, also referred herein as "key row", for each hierarchy level. Each cell in a level indication row 202.A-202.C ("key row")-except the cells in the optional level indication column 210 - comprises a parameter label. The parameter label is indicative of the parameter type to which parameter values which are contained in the column of said cell and which belong to the same hierarchical level as said cell belong. An example of such a table structure is illustrated in FIG. 4 and the key area is illustrated at reference number 202.

The example method 300 also includes retrieving 306, into memory from a database or other data store, data rows for each hierarchy level. Each of the at least two hierarchy levels may include one or more data rows. In case for a particular hierarchy level and for a particular parent data item, no data row should be retrievable from the database, then there generally can be no lower level rows. This may happen when not a single data item in said hierarchical level exists for which product related information is available in the database. The retrieved data rows are then ordered and grouped 308 according to hierarchy level and organization of the hierarchy represented in the data as described before. Subsequently the ordered and grouped 308 data rows may be written 310 to the table structure in memory. The hierarchical dataset may then be stored in some embodiments also in a non-volatile storage medium. In some such embodiments, and other embodiments where the hierarchical dataset is not stored, the method 300 includes providing 312, to the requestor, such as in the form of data transmitted via the network, a data representation of the hierarchical dataset from the memory. Providing 312 the hierarchical dataset may be provided simply by copying the table structure from the memory or providing a requesting program, app, or process a memory reference thereto that may be used to access the hierarchical dataset directly from the table structure in memory.

In some embodiments, each row of the table structure key includes a hierarchy level label and each row written to the table structure in the memory includes a hierarchy level label. Additionally, the table structure may include a number of columns equal to a number of data items of a hierarchy level of the at least two hierarchy levels including a largest number of data items per hierarchical level identified plus one additional column to which hierarchy level label data is written. For example, a first level of the hierarchy may include four columns, a second level may include five columns, and a third level may include three columns. Columns and data items are generally synonyms in this instance. The largest number of data items (i.e., columns) amongst the three hierarchy levels is five. Thus, the table structure will include five columns and in some embodiments, the table structure may include an additional column, as in the embodiment illustrated in FIG. 4, in which hierarchy level indication data is provided for each respective row.

Further, with regard to the data items or columns of the rows of hierarchy data, the columns of one hierarchy level need not have the same data type of equivalent columns of the other hierarchy level rows. For example, a row of a first hierarchy level may include ordered columns having data types of text, text, number, dollars, and date. A row of a second hierarchy level may include respectively ordered columns having data types of text, number, text, date, image. Thus, the data types of columns between rows are allowed to be un-aligned.

In some embodiments, the ordering and grouping 308 of data rows of each hierarchy level may include calculating a least one parameter value as defined in the request for the hierarchical dataset. Similarly, in some embodiments, one or more of the parameter values identified in the request to include in the hierarchy is a value calculated by a stored procedure of a database management system or a value calculated by a callable object, function, web service, and the like.
In some embodiments of the method 300, the providing 312 of the data representation of the hierarchical dataset includes retrieving the table structure from memory and encoding the table structure according to a defined schema, such as a markup language schema. In some such embodiments, the markup language schema is a defined extensible markup language (XML) schema. Such embodiments of the method 300 may then send, to the requestor via the network, the encoded table structure.

In some embodiments of the method 300, the request is received 302 within a client application. In such embodiments, the providing 312 of the data representation includes presenting the hierarchical dataset within a user interface view generated by the client application. However, the database from which the data rows are retrieved 306 may be accessed the network or from local data storage, such as may be stored on a volatile or non-volatile data storage device.
In some such embodiments of the method 300, presenting the hierarchical dataset within a user interface view generated by the client application may include determining a width of a display area within which the data representation of the hierarchical dataset is to be presented. Subsequently, the client application may generate a view of the data representation in the form of a table. In some such embodiments, the table has a width no greater than the width of the display area. The method 300 in such embodiments may further include scaling a width of each column of the table such that a sum of column widths is equal to the table width and placing text representative of the data of values for each column in respective columns of respective rows of the table. Further, when the text representation of a parameter value of a column has a width greater than a width of the column, the text may be wrapped such that the entirety of the text is presented the then scaling a height of each row according to a greatest height of text to be presented in columns of the respective row.

**FIG. 7** is a block diagram of a computing device, e.g. a mobile telecommunication device 112, a remote server 504, a display device 530, 536 or an electronic label device according to an example embodiment. In one embodiment, multiple such computer systems are utilized in a distributed network to implement multiple components in a distributed product information display system. An object-oriented, service-oriented, or other architecture may be used to implement such functions and communicate between the multiple systems and components. One example computing device in the form of a computer 410 may include a processing unit 402, memory 404, removable storage 412, and non-removable storage 414. The processing unit 402 may be configured for operating a transformation engine according to any one of the embodiments and examples described herein.

Although the example computing device is illustrated and described as computer 410, the computing device may be in different forms in different embodiments. For example, the computing device may instead be a smartphone, a tablet, or other computing device including the same or similar elements as illustrated and described with regard to FIG. 7. Further, although the various data storage elements are illustrated as part of the computer 410, the storage may also or alternatively include cloud-based storage accessible via a network, such as the Internet.

Returning to the computer 410, memory 404 may include volatile memory 406 and non-volatile memory 408. Computer 410 may include - or have access to a computing environment that includes a variety of computer-readable media, such as volatile memory 406 and non-volatile memory 408, removable storage 412 and non-removable storage 414. Computer storage includes random access memory (RAM), read only memory (ROM), erasable programmable read-only memory (EPROM) & electrically erasable programmable read-only memory (EEPROM), flash memory or other memory technologies, compact disc read-only memory (CD ROM), Digital Versatile Disks (DVD) or other optical disk storage, magnetic cassettes, magnetic tape, magnetic disk storage or other magnetic storage devices, or any other medium capable of storing computer-readable instructions. Computer 410 may include or have access to a computing environment that includes input 416, output 418, and a communication connection 420. The input 416 may include one or more of a touch screen, touchpad, mouse, keyboard, camera, and other input devices. The computer may operate in a networked environment using a communication connection 420 to connect to one or more remote computers, such as database servers, web servers, and other computing device. An example remote computer may include a personal computer (PC), server, router, network PC, a peer device or other common network node, or the like. The communication connection 420 may be a network interface device such as one or both of an Ethernet card and a wireless card or circuit that may be connected to a network. The network may include one or more of a Local Area Network (LAN), a Wide Area Network (WAN), the Internet, and other networks.

Computer-readable instructions stored on a computer-readable medium are executable by the processing unit 402 of the computer 410. A hard drive (magnetic disk or solid state), CD-ROM, and RAM are some examples of articles including a non-transitory computer-readable medium. For example, various computer programs or apps, such as one or more applications and modules implementing one or more of the methods illustrated and described herein or an app or application that executes on a mobile telecommunication device or is accessible via a web browser, may be stored on a non-transitory computer-readable medium.

## Claims

1. An electronic product information display system (500, 100), comprising
- a display device (530, 536) being assigned to at least one of a plurality of products (549, 550, 552), the display device having a display (534, 540), and being configured for displaying a code (556) on said display (534, 540), the code being indicative of the at least one product assigned to said display device;
- a mobile telecommunication device (112) assigned to a user (502), the mobile telecommunication device being configured for:
o reading the code (556) from the display of the display device;
o extracting an identifier of the at least one product from the read code;
o requesting information related to the at least one product from a database (510) by sending a request (570), the request comprising the extracted identifier;
o receiving, in response to the sending of the request, a table structure (515) from a transformation engine, the table structure comprising the requested product-related information; and
o displaying the received table structure via a display (520) of the mobile telecommunication device to the user;
- the transformation engine (548) being configured for transforming a hierarchical dataset (514, 590) received from the database (510) in response to the request (570) into the table structure (515), the hierarchical dataset comprising the requested information related to the at least one product and including multiple hierarchy levels (L0-L4), each hierarchical level comprising one or more data items, each data item having assigned a parameter, at least some of the data items comprising a parameter value of the respectively assigned parameter, the transformation comprising building the table structure in memory (558, 560, 562), the building of the table structure comprising:
o representing (605) each of at least two (L1-L3) of the multiple hierarchy levels as a level indication row (202.A, 202.B, 202.C), the table structure including a level indication area (202), the level indication area including the level indication rows (202.A, 202.B, 202.C);
o creating (606) columns (212-220) of the table structure by identifying the one of the at least two hierarchical levels which comprises a maximum number of data items having assigned a parameter that is unique within the data items of said hierarchical level and by representing each unique parameter being assigned to a data item of the identified hierarchical level as a column (212-220) of the table structure, each of the level indication rows including a parameter label for each column (212-220) of said level indication row;
o writing (607) the level indication rows in the memory;
o retrieving (608), into the memory from the database (510), one or more data rows (204.1-204.n) for each of the at least two hierarchy levels, whereby each data row (204.3) selectively comprises parameter values which are contained in data items (N33, N34, N35) which belong to said hierarchical level (L3);
○ ordering and grouping (610) the retrieved data rows, whereby the grouping is performed such that all data rows having been retrieved for a particular hierarchical level (L3) and which share, in the hierarchical dataset, the same data item as their parent node, are grouped together, and whereby the ordering is performed such that said grouped data rows (204.3, 204.4) directly succeed the one (204.2) of the retrieved data rows which comprises a parameter value which is contained in said parent node (N19) and/or which is contained in a sibling node (N21) of said parent node in the hierarchical dataset;
o writing (612) the ordered and grouped data rows of each of the at least two hierarchy levels to the table structure in the memory.

2. The product information display system of claim 1, wherein each level indication row includes a hierarchy level label and each data row (204.1-204.n) includes a hierarchy level label.

3. The product information display system of claim 2, wherein the table structure includes one additional column (210) comprising the hierarchy level labels.

4. The product information display system of any one of the previous claims,
- wherein parameters assigned to data items which act as parent nodes of two or more other ones of the data items are excluded from being represented as one of the columns,
- wherein parameter values contained in said data items are hidden in the table structure, and
- wherein the ordering is performed such that the grouped data rows (204.3, 204.4) directly succeed the one (204.2) of the retrieved data rows comprising parameter values contained in the sibling node (N21) of said parent node (N19) in the hierarchical dataset.

5. The product information display system of any one of the previous claims,
wherein at least a first parameter value (222) of a first one (204.1) of the data rows and a second parameter value (224) of a second one (204.2) of the data rows are stored in the same one (220) of the columns (212-220) of the table structure, the first data row belonging to a different hierarchical level than the second data row, the first parameter value being of a different data type than the second parameter value.

6. The product information display system of any one of the previous claims,
wherein the transformation is performed such that all parameter values belonging to the same one of the at least two hierarchical levels and which are written to the same one of the columns (212-220) must share the same data type while parameter values belonging to different ones of the at least two hierarchical levels and/or which are written to different ones of the columns (212-220) are allowed to have a different data type.

7. The product information display system of any one of the previous claims,
wherein the transformation engine (548.A) is hosted on a server computer (504), the server computer being operatively coupled to the database (510) and being connected to the mobile telecommunication device (112) and with the display device (530, 536) via a network (108), wherein the transformation engine is configured for receiving the request from the mobile telecommunication device via the network (108), for reading the hierarchical dataset in response to the receiving of the request from the database and for returning the table structure to the mobile telecommunication device via the network.

8. The product information display system of any one of the previous claims 1-6,
wherein the transformation engine (548.B) is hosted on the mobile telecommunication device (112), the mobile telecommunication device being operatively coupled to the database (510) and being connected with the display device (530, 536) via a network (108), wherein the transformation engine is configured for reading the hierarchical dataset via the network and for returning the table structure to the mobile telecommunication device via the network.

9. The product information display system of any one of the previous claims, further comprising an electronic label device (542),
wherein the electronic label device comprises a display (546) and is assigned to at least a further one (552) of the plurality of products (549, 550, 552),
wherein the transformation engine (548.A) is hosted on a server computer (504);
wherein the display device and the electronic label device are operatively coupled to the database (510) via a network (108);
wherein the transformation engine is configured for reading the hierarchical dataset (514, 590) from the database (510) and for returning the table structure to the mobile telecommunication device and/or to the electronic label device via the network;
wherein the electronic label device is configured for receiving the table structure from the transformation engine and for displaying the received table structure on the display of the electronic label device.

10. The product information display system of any one of the previous claims,
wherein the request comprises an indication of the at least two of the multiple hierarchical levels,
wherein selectively the at least two hierarchical levels indicated in the request are represented by respective ones of the level indication rows, and wherein selectively data rows which belong to said at least two indicated hierarchical levels are read from the database and are written to the table structure.

11. The product information display system of any one of the previous claims,
wherein the transformation engine (548) is further configured for:
- formatting the table structure according to a defined schema; and
- sending, to the requestor via the network, the encoded table structure.

12. The product information display system of any one of the previous claims,
wherein the mobile telecommunication device hosts a client application, the client application being configured for:
- receiving a description of the hierarchical dataset from the database, said description lacking the data rows to be retrieved for the hierarchical levels of the hierarchical dataset;
- displaying the received description via the display (520) of the mobile telecommunication device to the user (502) via a user interface view generated by the client application for enabling the user to select the at least two of the multiple hierarchical levels;
- receiving a user input-action by the mobile telecommunication device, the user input action being indicative of the at least two of the plurality of hierarchical levels selected by the user; and
- including an indication of the selected at least two hierarchical levels in the request.

13. The product information display system of any one of the previous claims,
wherein the displaying of the table structure (515) includes:
- determining a width of a display area (204) within which the table structure (515) is to be displayed; and
- generating a view of the table structure (515) in the form of a table, wherein:
o the table has a width no greater than the width of the display area;
o a width of each column of said table is automatically chosen such that a sum of column widths is equal to the table width;
o text being representative of the parameter represented by each of said columns in each of the level indication rows is placed in said column of said level indication row;
o when one of the text representations has a width greater than a width of the column, the text is wrapped such that the entirety of the text is presented in said column; and
o scaling a height of each row according to a greatest height of text to be presented in columns of the respective data-row or level indication row.

14. A computer-implemented method, comprising:
- receiving (602) a hierarchical dataset (514, 590), the hierarchical dataset comprising product-related information, the hierarchical dataset including multiple hierarchy levels (L0-L4), each hierarchical level comprising one or more data items, each data item having assigned a parameter, at least some of the data items comprising a parameter value of the respectively assigned parameter;
- transforming (604) the received hierarchical dataset into a table structure (515), the transformation comprising building the table structure in memory (558, 560, 562), the building of the table structure comprising:
o representing (605) each of at least two (L1-L3) of the multiple hierarchy levels as a level indication row (202.A, 202.B, 202.C), the table structure including a level indication area (202), the level indication area including the level indication rows (202.A, 202.B, 202.C);
o creating (606) columns (212-220) of the table structure by identifying the one of the at least two hierarchical levels which comprises a maximum number of data items having assigned a parameter that is unique within the data items of said hierarchical level and by representing each unique parameter being assigned to a data item of the identified hierarchical level as a column (212-220) of the table structure, each of the level indication rows including a parameter label for each column (212-220) of said level indication row;
∘ writing (607) the level indication rows in the memory;
∘ retrieving (608), into the memory from a database (510), one or more data rows (204.1-204.n) for each of the at least two hierarchy levels, whereby each data row (204.3) selectively comprises parameter values which are contained in data items (N33, N34, N35) which belong to said hierarchical level (L3);
∘ ordering and grouping (610) the retrieved data rows, whereby the grouping is performed such that all data rows having been retrieved for a particular hierarchical level (L3) and which share, in the hierarchical dataset, the same data item as their parent node, are grouped together, and whereby the ordering is performed such that said grouped data rows (204.3, 204.4) directly succeed the one (204.2) of the retrieved data rows which comprises a parameter value which is contained in said parent node (N19) and/or which is contained in a sibling node (N21) of said parent node in the hierarchical dataset;
o writing (612) the ordered and grouped data rows of each of the at least two hierarchy levels to the table structure in the memory;
providing the table structure (515) for display to a user via the display (520) of a mobile telecommunication device (112).

15. A non-transitory computer-readable medium, with instructions stored there which when executed by at least one processor of a computing device, cause the computing device to perform a method according to claim 14.

## Patentansprüche

1. Elektronisches Produktinformationsanzeigesystem (500, 100), umfassend
- eine Anzeigeeinheit (530, 536), die mindestens einem von einer Vielzahl von Produkten (549, 550, 552) zugeordnet ist, wobei die Anzeigeeinheit eine Anzeige (534, 540) aufweist und so ausgelegt ist, dass sie einen Code (556) auf der Anzeige (534, 540) anzeigt, wobei der Code das mindestens eine Produkt angibt, das der Anzeigeeinheit zugeordnet ist;
- eine mobile Telekommunikationseinrichtung (112), die einem Benutzer (502) zugeordnet ist, wobei die mobile Telekommunikationseinrichtung so ausgelegt ist, dass sie:
• den Code (556) von der Anzeige der Anzeigeeinheit liest;
• aus dem gelesenen Code eine Kennung des mindestens einen Produkts extrahiert;
• Informationen zu dem mindestens einen Produkt aus einer Datenbank (510) abfragt, indem sie eine Anfrage (570) sendet, wobei die Anfrage die extrahierte Kennung umfasst;
• als Reaktion auf das Senden der Anfrage eine Tabellenstruktur (515) von einer Transformationsengine empfängt, wobei die Tabellenstruktur die abgefragten produktbezogenen Informationen umfasst; und
• die empfangene Tabellenstruktur über eine Anzeige (520) der mobilen Telekommunikationseinrichtung dem Benutzer anzeigt;
- wobei die Transformationsengine (548) so ausgelegt ist, dass sie einen hierarchischen Datensatz (514, 590), den sie aus der Datenbank (510) als Reaktion auf die Anfrage (570) empfangen hat, in die Tabellenstruktur (515) umwandelt, wobei der hierarchische Datensatz die abgefragten Informationen zu dem mindestens einen Produkt umfasst und mehrere Hierarchieebenen (L0 bis L4) aufweist, jede Hierarchieebene ein oder mehrere Datenelemente umfasst, jedem Datenelement ein Parameter zugeordnet ist, zumindest einige der Datenelemente einen Parameterwert des jeweils zugeordneten Parameters umfassen, die Umwandlung ein Aufbauen der Tabellenstruktur im einem Speicher (558, 560, 562) umfasst, wobei das Aufbauen der Tabellenstruktur Folgendes umfasst:
• Darstellen (605) von jeder von mindestens zwei (L1 bis L3) der mehreren Hierarchieebenen als Ebenenanzeigereihe (202.A, 202.B, 202.C), wobei die Tabellenstruktur einen Ebenenanzeigebereich (202) aufweist, wobei der Ebenenanzeigebereich die Ebenenanzeigereihen (202.A, 202.B, 202.C) aufweist;
• Erstellen (606) von Spalten (212 bis 220) der Tabellenstruktur durch Ermitteln der Ebene von den mindestens zwei Hierarchieebenen, die eine Höchstzahl von Datenelementen umfasst, denen ein Parameter zugewiesen ist, der innerhalb der Datenelemente der Hierarchieebene eindeutig ist, sowie durch Darstellen jedes eindeutigen Parameters, der einem Datenelement der ermittelten Hierarchieebene zugeordnet ist, als eine Spalte (212 bis 220) der Tabellenstruktur, wobei jede der Ebenenanzeigereihen eine Parameterkennzeichnung für jede Spalte (212 bis 220) der Ebenenanzeigereihe aufweist;
• Schreiben (607) der Ebenenanzeigereihen in den Speicher;
• Abrufen (608), aus der Datenbank (510) in den Speicher, von einer oder mehreren Datenreihen (204.1 bis 204.n) für jede von den mindesten zwei Hierarchieebenen, wobei jede Datenreihe (204.3) gezielt Parameterwerte umfasst, die in Datenelementen (N33, N34, N35) enthalten sind, die zu der Hierarchieebene (L3) gehören;
• Ordnen und Zusammenfassen (610) der abgerufenen Datenreihen, wobei das Zusammenfassen so erfolgt, dass sämtliche Datenreihen, die für eine bestimmte Hierarchieebene (L3) abgerufen worden sind und die in dem hierarchischen Datensatz dasselbe Datenelement als ihren übergeordneten Knoten aufweisen, zusammengefasst werden, und wobei das Ordnen so erfolgt, dass die zusammengefassten Datenreihen (204.3, 204.4) unmittelbar auf die Reihe (204.2) der abgerufenen Datenreihen folgen, die einen Parameterwert umfasst, der in dem übergeordneten Knoten (N19) enthalten ist, und/oder der in einem gleichgeordneten Knoten (N21) des übergeordneten Knotens in dem hierarchischen Datensatz enthalten ist;
• Schreiben (612) der geordneten und zusammengefassten Datenreihen von jeder der mindestens zwei Hierarchieebenen in die Tabellenstruktur in dem Speicher.

2. Produktinformationsanzeigesystem nach Anspruch 1, wobei jede Ebenenanzeigereihe eine Hierarchieebenenkennzeichnung aufweist und jede Datenreihe (204.1 bis 204.n) eine Hierarchieebenenkennzeichnung aufweist.

3. Produktinformationsanzeigesystem nach Anspruch 2, wobei die Tabellenstruktur eine zusätzliche Spalte (210) aufweist, die die Hierarchieebenenkennzeichnungen umfasst.

4. Produktinformationsanzeigesystem nach einem der vorhergehenden Ansprüche,
- wobei Parameter, die Datenelementen zugeordnet sind, die als übergeordnete Knoten von zwei oder mehr anderen der Datenelemente dienen, aus der Darstellung als eine der Spalten ausgeschlossen sind,
- wobei Parameterwerte, die in den Datenelementen enthalten sind, in der Tabellenstruktur versteckt sind, und
- wobei das Ordnen so erfolgt, dass die zusammengefassten Datenreihen (204.3, 204.4) unmittelbar auf die Reihe (204.2) der abgerufenen Datenreihen folgen, die Parameterwerte umfasst, die in dem gleichgeordneten Knoten (N21) des übergeordneten Knotens (N19) in dem hierarchischen Datensatz enthalten sind.

5. Produktinformationsanzeigesystem nach einem der vorhergehenden Ansprüche,
wobei zumindest ein erster Parameterwert (222) von einer ersten Reihe (204.1) der Datenreihen und ein zweiter Parameterwert (224) einer zweiten Reihe (204.2) der Datenreihen in ein und derselben Spalte (220) der Spalten (212 bis 220) der Tabellenstruktur gespeichert sind, wobei die erste Datenreihe zu einer anderen Hierarchieebene gehört als die zweite Datenreihe, wobei der erste Parameterwert ein anderer Datentyp ist als der zweite Parameterwert.

6. Produktinformationsanzeigesystem nach einem der vorhergehenden Ansprüche,
wobei die Umwandlung so erfolgt, dass alle Parameterwerte, die zur selben Ebene der mindestens zwei Hierarchieebenen gehören und die in dieselbe Spalte der Spalten (212 bis 220) geschrieben werden, denselben Datentyp aufweisen müssen, während Parameterwerte, die zu unterschiedlichen Ebenen der mindestens zwei Hierarchieebenen gehören und/oder in unterschiedliche Spalten der Spalten (212 bis 220) geschrieben werden, einen anderen Datentyp aufweisen dürfen.

7. Produktinformationsanzeigesystem nach einem der vorhergehenden Ansprüche, wobei die Transformationsengine (548.A) auf einem Servercomputer (504) gehostet ist, der Servercomputer funktionsmäßig mit der Datenbank (510) verbunden ist und über ein Netzwerk (108) mit der mobilen Telekommunikationseinrichtung (112) und mit der Anzeigeeinheit (530, 536) verbunden ist, die Transformationsengine zum Empfangen der Anfrage von der mobilen Telekommunikationseinrichtung über das Netzwerk (108), zum Lesen des hierarchischen Datensatzes als Reaktion auf das Empfangen der Anfrage aus der Datenbank und zum Zurücksenden der Tabellenstruktur an die mobile Telekommunikationseinrichtung über das Netzwerk ausgelegt ist.

8. Produktinformationsanzeigesystem nach einem der vorhergehenden Ansprüche 1 bis 6, wobei die Transformationsengine (548.B) auf der mobilen Telekommunikationseinrichtung (112) gehostet ist, die mobile Telekommunikationseinrichtung funktionsmäßig mit der Datenbank (510) verbunden ist und über ein Netzwerk (108) mit der Anzeigeeinheit (530, 536) verbunden ist, wobei die Transformationsengine zum Lesen des hierarchischen Datensatzes über das Netzwerk und zum Zurücksenden der Tabellenstruktur an die mobile Telekommunikationseinrichtung über das Netzwerk ausgelegt ist.

9. Produktinformationsanzeigesystem nach einem der vorhergehenden Ansprüche, das ferner eine elektronische Kennzeichnungseinrichtung (542) umfasst,
wobei die elektronische Kennzeichnungseinrichtung eine Anzeige (546) umfasst und mindestens einem weiteren Produkt (552) aus der Vielzahl von Produkten (549, 550, 552) zugeordnet ist,
wobei die Transformationsengine (548.A) auf einem Servercomputer (504) gehostet ist;
wobei die Anzeigeeinheit und die elektronische Kennzeichnungseinrichtung funktionsmäßig über ein Netzwerk (108) mit der Datenbank (510) verbunden sind;
wobei die Transformationsengine zum Lesen des hierarchischen Datensatzes (514, 590) aus der Datenbank (510) und zum Zurücksenden der Tabellenstruktur an die mobile Telekommunikationseinrichtung und/oder an die elektronische Kennzeichnungseinrichtung über das Netzwerk ausgelegt ist;
wobei die elektronische Kennzeichnungseinrichtung zum Empfangen der Tabellenstruktur von der Transformationsengine und zum Anzeigen der empfangenen Tabellenstruktur auf der Anzeige der elektronischen Kennzeichnungseinrichtung ausgelegt ist.

10. Produktinformationsanzeigesystem nach einem der vorhergehenden Ansprüche,
wobei die Anfrage eine Angabe zu den mindestens zwei Ebenen der mehreren Hierarchieebenen umfasst,
wobei die mindestens zwei in der Anfrage angegebenen Hierarchieebenen gezielt von entsprechenden Reihen der Ebenenanzeigereihen dargestellt werden, und
wobei Datenreihen, die zu den mindestens zwei angegebenen Hierarchieebenen gehören, gezielt aus der Datenbank gelesen und in die Tabellenstruktur geschrieben werden.

11. Produktinformationsanzeigesystem nach einem der vorhergehenden Ansprüche,
wobei die Transformationsengine (548) ferner ausgelegt ist zum:
- Formatieren der Tabellenstruktur nach einem vorgegebenen Schema; und
- Senden der codierten Tabellenstruktur an den Anforderer über das Netzwerk.

12. Produktinformationsanzeigesystem nach einem der vorhergehenden Ansprüche,
wobei auf der mobilen Telekommunikationseinrichtung eine Client-Anwendung gehostet ist, wobei die Client-Anwendung so ausgelegt ist, dass sie:
- eine Beschreibung des hierarchischen Datensatzes aus der Datenbank empfängt, wobei in der Beschreibung die Datenreihen fehlen, die für die Hierarchieebenen des hierarchischen Datensatzes abgerufen werden müssen;
- dem Benutzer (502) die empfangene Beschreibung über die Anzeige (520) der mobilen Telekommunikationseinrichtung über eine Benutzerschnittstellenansicht anzeigt, die von der Client-Anwendung erzeugt wird, damit der Benutzer die mindestens zwei der mehreren Hierarchieebenen auswählen kann;
- eine Benutzereingabeaktion von der mobilen
Telekommunikationseinrichtung empfängt, wobei die Benutzereingabeaktion die mindestens zwei Ebenen der Vielzahl von Hierarchieebenen angibt, die der Benutzer ausgewählt hat; und
- eine Angabe zu den ausgewählten mindestens zwei Hierarchieebenen in die Anfrage aufnimmt.

13. Produktinformationsanzeigesystem nach einem der vorhergehenden Ansprüche,
wobei das Anzeigen der Tabellenstruktur (515) Folgendes umfasst:
- Bestimmen einer Breite eines Anzeigebereichs (204), innerhalb der die Tabellenstruktur (515) angezeigt werden soll; und
- Erzeugen einer Darstellung der Tabellenstruktur (515) in Form einer Tabelle, wobei:
• die Tabelle eine Breite aufweist, die nicht breiter ist als die Breite des Anzeigebereichs;
• eine Breite jeder Spalte der Tabelle automatisch derart gewählt ist, dass eine Summe von Spaltenbreiten der Tabellenbreite entspricht;
• Text, der den Parameter darstellt, der von jeder der Spalten in jeder der Ebenenanzeigereihen dargestellt wird, in die Spalte der Ebenenanzeigereihe gesetzt wird;
• wenn eine der Textdarstellungen eine Breite breiter als eine Breite der Spalte aufweist, der Text derart umgebrochen wird, dass der gesamte Text in der Spalte dargestellt wird; und
• Skalieren einer Höhe jeder Reihe entsprechend einer höchsten Höhe von in Spalten der jeweiligen Datenreihe oder Ebenenanzeigereihe darzustellendem Text.

14. Computerimplementiertes Verfahren, umfassend:
- Empfangen (602) eines hierarchischen Datensatzes (514, 590), wobei der hierarchische Datensatz produktbezogene Informationen umfasst, der hierarchische Datensatz mehrere Hierarchieebenen (L0 bis L4) aufweist, jede Hierarchieebene ein oder mehrere Datenelemente umfasst, jedem Datenelement ein Parameter zugeordnet ist, zumindest einige der Datenelemente einen Parameterwert des jeweils zugeordneten Parameters umfassen;
- Umwandeln (604) des empfangenen hierarchischen Datensatzes in eine Tabellenstruktur (515), wobei das Umwandeln ein Aufbauen der Tabellenstruktur im Speicher (558, 560, 562) umfasst, wobei das Aufbauen der Tabellenstruktur Folgendes umfasst:
• Darstellen (605) von jeder von mindestens zwei (L1 bis L3) der mehreren Hierarchieebenen als Ebenenanzeigereihe (202.A, 202.B, 202.C), wobei die Tabellenstruktur einen Ebenenanzeigebereich (202) aufweist, wobei der Ebenenanzeigebereich die Ebenenanzeigereihen (202.A, 202.B, 202.C) aufweist;
• Erstellen (606) von Spalten (212 bis 220) der Tabellenstruktur durch Ermitteln der Ebene der mindestens zwei Hierarchieebenen, die eine Höchstzahl von Datenelementen umfasst, denen ein Parameter zugewiesen ist, der innerhalb der Datenelemente der Hierarchieebene eindeutig ist, sowie durch Darstellen jedes eindeutigen Parameters, der einem Datenelement der ermittelten Hierarchieebene zugeordnet ist, als eine Spalte (212 bis 220) der Tabellenstruktur, wobei jede der Ebenenanzeigereihen eine Parameterkennzeichnung für jede Spalte (212 bis 220) der Ebenenanzeigereihe aufweist;
• Schreiben (607) der Ebenenanzeigereihen in den Speicher;
• Abrufen (608), aus einer Datenbank (510) in den Speicher, von einer oder mehreren Datenreihen (204.1 bis 204.n) für jede von den mindesten zwei Hierarchieebenen, wobei jede Datenreihe (204.3) gezielt Parameterwerte umfasst, die in Datenelementen (N33, N34, N35) enthalten sind, die zu der Hierarchieebene (L3) gehören;
• Ordnen und Zusammenfassen (610) der abgerufenen Datenreihen, wobei das Zusammenfassen so erfolgt, dass sämtliche Datenreihen, die für eine bestimmte Hierarchieebene (L3) abgerufen worden sind und die in dem hierarchischen Datensatz dasselbe Datenelement als ihren übergeordneten Knoten aufweisen, zusammengefasst werden, und wobei das Ordnen so erfolgt, dass die zusammengefassten Datenreihen (204.3, 204.4) unmittelbar auf die Reihe (204.2) der abgerufenen Datenreihen folgen, die einen Parameterwert umfasst, der in dem übergeordneten Knoten (N19) enthalten ist, und/oder der in einem gleichgeordneten Knoten (N21) des übergeordneten Knotens in dem hierarchischen Datensatz enthalten ist;
• Schreiben (612) der geordneten und zusammengefassten Datenreihen von jeder der mindestens zwei Hierarchieebenen in die Tabellenstruktur in dem Speicher;
• Bereitstellen der Tabellenstruktur (515) zum Anzeigen für einen Benutzer über die Anzeige (520) einer mobilen Telekommunikationseinrichtung (112).

15. Nichtflüchtiges computerlesbares Medium mit dort gespeicherten Anweisungen, die bei Ausführung durch mindestens einen Prozessor einer Datenverarbeitungseinheit bewirken, dass die Datenverarbeitungseinheit ein Verfahren nach Anspruch 14 ausführt.

## Revendications

1. Système d'affichage d'informations sur un produit électronique (500, 100) comprenant
- un dispositif d'affichage (530, 536) étant affecté à au moins une pluralité de produits (549, 550, 552), le dispositif d'affichage ayant un affichage (534, 540), et étant configuré pour afficher un code (556) sur ledit affichage (534, 540), le code étant l'indication de l'au moins un produit affecté audit service d'affichage ;
- un dispositif mobile de télécommunication (112) affecté à un utilisateur (502), le dispositif mobile de télécommunication étant configuré pour :
o lire le code (556) à partir de l'affichage du dispositif d'affichage ;
o extraire un identifiant de l'au moins un produit à partir du code lu ;
o demander une information liée à l'au moins un produit à partir d'une base de données (510) en envoyant une demande (570), la demande comprenant l'identifiant extrait ;
o recevoir, en réponse à l'envoi de la demande, une structure de table (515) depuis un moteur de transformation, la structure de table comprenant l'information liée au produit demandée ; et
o afficher à l'attention de l'utilisateur la structure de la table reçue via un affichage (520) du dispositif mobile de télécommunication ;
- le moteur de transformation (548) étant configuré pour transformer un fichier de données hiérarchiques (514, 590) reçu en provenance de la table de données (510) en réponse à la demande (570) dans la structure de la table (515), le fichier des données hiérarchiques comprenant l'information demandée en liaison avec l'au moins un produit et renfermant de multiples niveaux hiérarchiques (L0 à L4), chacun des niveaux hiérarchiques comprenant un ou plusieurs éléments de données, chacun des éléments de données se voyant attribué un paramètre, au moins certains des éléments de données comprenant une valeur de paramètre du paramètre respectivement attribué, la transformation comprenant la construction dans la mémoire (558, 560, 562) de la structure de la table, la construction de la structure de la table comprenant :
o la représentation (605) de chacun d'au moins deux (L1 à L3) des niveaux hiérarchiques multiples en tant que ligne indicatrice du niveau (202.A, 202.B, 202.C), la structure de la table comportant les lignes indicatrices de niveau (202.A, 202.B, 202.C) ;
o la création (606) de colonnes (212 à 220) de la structure de la table en identifiant l'un des au moins deux niveaux hiérarchiques qui comprend un nombre maximum d'éléments de données se voyant attribué un paramètre qui est unique dans les éléments de données dudit niveau hiérarchique et en représentant chaque paramètre unique qui est attribué à un élément de données du niveau hiérarchique identifié comme étant une colonne (212 à 220) de la structure de la table, chacune des lignes indicatrices de niveau comprenant une étiquette de paramètre pour chaque colonne (212 à 220) de ladite ligne d'indication du niveau ;
o l'écriture (607) des lignes indicatrices de niveau dans la mémoire ;
o l'extraction (608), vers la mémoire et à partir de la base de données (510), d'une seule ou de plusieurs lignes de données (204.1 à 204.n) pour chacun des au moins deux niveaux de hiérarchie, au moyen de laquelle chacune des lignes de données (204.3) comprend sélectivement les valeurs de paramètre qui sont contenues dans les éléments de données (N33, N34, N35) qui appartiennent audit niveau hiérarchique (L3) ;
o le classement et le regroupement (610) des lignes de données extraites, au moyen desquels le regroupement est réalisé de sorte que toutes les lignes de données qui ont été extraites pour un niveau hiérarchique particulier (L3) et qui partagent, dans le fichier des données hiérarchiques, les mêmes éléments de données que leur noeud parent, sont regroupés ensemble, et au moyen lesquels le classement est réalisé de sorte que lesdites lignes de données groupées (204.3, 204.4) succèdent directement à celle (204.2) parmi les lignes de données extraites qui comprend une valeur de paramètre qui est contenue dans ledit noeud parent (N19) et/ou qui est contenu dans un noeud frère (N21) dudit noeud parent dans le fichier des données hiérarchiques ;
o l'écriture (612) des lignes de données classées et regroupées de chacun des au moins deux niveaux de hiérarchie dans la structure de la table qui se trouve dans la mémoire.

2. Système d'affichage d'informations sur un produit selon la revendication 1, dans lequel chacune des lignes indicatrices de niveau comprend une étiquette de niveau de hiérarchie et chacune des lignes de données (204.1 à 204.n) comprend une étiquette de niveau de hiérarchie.

3. Système d'affichage d'informations sur un produit selon la revendication 2, dans lequel la structure de la table comprend une colonne supplémentaire (210) comprenant les étiquettes de niveau de hiérarchie.

4. Système d'affichage d'informations sur un produit selon l'une quelconque des revendications précédentes,
- dans lequel il est exclu de représenter dans l'une des colonnes les paramètres attribués aux éléments de données qui agissent en tant que noeuds parents de deux ou plusieurs autres éléments de données,
- dans lequel les valeurs de paramètre contenues dans lesdits éléments de données sont cachées dans la structure de la table, et
- dans lequel le classement est réalisé de sorte que les lignes de données regroupées (204.3, 204.4) succèdent directement à celle (204.2) parmi les lignes de données extraites qui comprend les valeurs de paramètres contenues dans le noeud frère (N21) dudit noeud parent (N19) dans le fichier des données hiérarchiques.

5. Système d'affichage d'informations sur un produit selon l'une quelconque des revendications précédentes, dans lequel au moins une première valeur de paramètre (222) d'une première (204.1) ligne de données et une seconde valeur de paramètre (224) d'une seconde (204.2) ligne de données sont stockées dans la même et une seule (220) colonne (212 à 220) de la structure de la table, la première ligne de données appartenant à un niveau hiérarchique différent de la seconde ligne de données, la première valeur de paramètre étant d'un type de données différent de la seconde valeur de paramètre.

6. Système d'affichage d'informations sur un produit selon l'une quelconque des revendications précédentes, dans lequel la transformation est réalisée de sorte que toutes les valeurs de paramètre appartiennent au même niveau des au moins deux niveaux hiérarchiques et qui sont écrites dans la même et une seule colonne (212 à 220) doivent partager le même type de données alors que les valeurs de paramètre qui appartiennent à des niveaux différents des au moins deux niveaux hiérarchiques et/ou qui sont écrites dans des colonnes différentes (212 à 220) peuvent avoir un type de données différent.

7. Système d'affichage d'informations sur un produit selon l'une quelconque des revendications précédentes, dans lequel le moteur de transformation (548.A) est hébergé sur un serveur informatique (504), le serveur informatique étant couplé de manière fonctionnelle avec la base de données (510) et connecté au dispositif mobile de télécommunication (112) et au dispositif d'affichage (530, 536) via un réseau (108), où le moteur de transformation est configuré pour recevoir la demande émanant du dispositif mobile de télécommunication via le réseau (108), pour lire le fichier des données hiérarchiques en réponse à la réception de la demande en provenance de la base de données et pour renvoyer la structure de la table vers le dispositif mobile de télécommunication via le réseau.

8. Système d'affichage d'informations sur un produit selon l'une quelconque des revendications 1 à 8 précédentes, dans lequel le moteur de transformation (548.B) est hébergé sur le dispositif mobile de télécommunication (112), le dispositif mobile de télécommunication étant couplé de manière fonctionnelle avec la base de données (510) et connecté au dispositif d'affichage (530, 536) via un réseau (108), où le moteur de transformation est configuré pour lire le fichier des données hiérarchiques via le réseau et pour renvoyer la structure de la table vers le dispositif mobile de télécommunication via le réseau.

9. Système d'affichage d'informations sur un produit selon l'une quelconque des revendications précédentes, comprenant en outre un dispositif d'étiquetage électronique (542),
dans lequel le dispositif d'étiquetage électronique comprend un affichage (546) et est affecté à au moins un nouveau produit (552) de la pluralité des produits (549, 550, 552),
où le moteur de transformation (548.A) est hébergé sur un serveur informatique (504);
où le dispositif d'affichage et le dispositif d'étiquetage électronique sont couplés de manière fonctionnelle à la base de données (510) via un réseau (108) ;
où le moteur de transformation est configuré pour lire le fichier des données hiérarchiques (514, 590) à partir de la base de données (510) et pour renvoyer la structure de la table vers le dispositif mobile de télécommunication et/ou le dispositif d'étiquetage électronique via le réseau ;
où le dispositif d'étiquetage électronique est configuré pour recevoir la structure de la table émanant du moteur de transformation et pour afficher la structure de la table sur l'affichage du dispositif d'étiquetage électronique.

10. Système d'affichage d'informations sur un produit selon l'une quelconque des revendications précédentes, dans lequel la demande comprend une indication des au moins deux parmi les niveaux hiérarchiques multiples,
où sélectivement les au moins deux niveaux hiérarchiques indiqués dans la demande sont représentés par les lignes respectives de l'indication du niveau, et où sélectivement les lignes de données qui appartiennent audits au moins deux niveaux hiérarchiques indiqués sont lues à partir de la base de données et sont écrites dans la structure de la table.

11. Système d'affichage d'informations sur un produit selon l'une quelconque des revendications précédentes, dans lequel le moteur de transformation (548) est en outre configuré pour :
- formater la structure de la table selon un schéma défini ; et
- envoyer, au demandeur via le réseau, la structure de la table encodée.

12. Système d'affichage d'informations sur un produit selon l'une quelconque des revendications précédentes, dans lequel le dispositif mobile de télécommunication héberge une application cliente, l'application cliente étant configurée pour :
- recevoir une description du fichier des données hiérarchiques en provenance de la base de données, ladite description faisant abstraction des lignes de données à extraire pour les niveaux hiérarchiques du fichier des données hiérarchiques ;
- afficher la description reçue via l'affichage (520) du dispositif mobile de télécommunication à l'attention de l'utilisateur (502) via une vue de l'interface utilisateur générée par l'application cliente pour permettre à l'utilisateur de choisir les au moins deux des niveaux hiérarchiques multiples ;
- recevoir une action d'entrée de l'utilisateur par le dispositif mobile de télécommunication, l'action d'entrée de l'utilisateur étant l'indication des au moins deux de la pluralité des niveaux hiérarchiques choisis par l'utilisateur ; et
- inclure une indication des au moins deux niveaux hiérarchiques choisis dans la demande.

13. Système d'affichage d'informations sur un produit selon l'une quelconque des revendications précédentes, dans lequel l'affichage de la structure de la table (515) comprend :
- la détermination de la largeur de la surface d'affichage (204) à l'intérieur de laquelle la structure de la table (515) doit être affichée ; et
- la création d'une vue de la structure de la table (515) ayant la forme d'une table, où :
o la table a une largeur qui n'est pas supérieure à la largeur de la surface d'affichage ;
o la largeur de chacune des colonnes de ladite table est choisie automatiquement de sorte que la somme des largeurs des colonnes est égale à la largeur de la table ;
o le texte qui est représentatif du paramètre représenté par chacune desdites colonnes dans chacune des lignes indicatrices de niveau est placé dans ladite colonne de ladite ligne indicatrice de niveau;
o lorsqu'une des représentations sous forme de texte a une largeur supérieure à la largeur de la colonne, le texte est adapté de sorte que la totalité du texte est présentée dans ladite colonne ; et
o dimensionner la hauteur de chacune des lignes selon la plus grande hauteur du texte à présenter dans les colonnes respectives de la ligne de données ou de l'indication du niveau.

14. Procédé mis en oeuvre par ordinateur, comprenant :
- la réception (602) d'un fichier de données hiérarchiques (514, 590), le fichier de données hiérarchiques comprenant l'information liée au produit, le fichier des données hiérarchiques comprenant de multiples niveaux hiérarchiques (L0 à L4), chacun des niveaux hiérarchiques comprenant un ou plusieurs éléments de données, chacun des éléments de données se voyant attribué un paramètre, au moins certains des éléments de données comprenant une valeur de paramètre du paramètre respectivement attribué ;
- la transformation (604) de la base des données hiérarchiques reçue dans la structure de la table (515), la transformation comprenant la construction de la structure de la table dans la mémoire (558, 560, 562), la construction de la structure de table comprenant :
o la représentation (605) de chacun d'au moins deux (L1 à L3) des niveaux hiérarchiques multiples en tant que ligne indicatrice de niveau (202.A, 202.B, 202.C), la structure de la table comprenant une zone d'indication du niveau (202), la zone d'indication du niveau comprenant les lignes indicatrices de niveau (202.A, 202.B, 202.C) ;
o la création (606) de colonnes (212 à 220) de la structure de la table en identifiant celui de l'au moins deux niveaux hiérarchiques qui comprend un nombre maximum d'éléments de données ayant attribué un paramètre qui est unique dans les éléments de données dudit niveau hiérarchique et en représentant chaque paramètre unique qui est attribué à un élément de données du niveau hiérarchique identifié comme étant une colonne (212 à 220) de la structure de la table, chacune des lignes indicatrices de niveau comprenant une étiquette de paramètre pour chaque colonne (212 à 220) de ladite ligne d'indication du niveau ;
o l'écriture (607) des lignes indicatrices de niveau dans la mémoire ;
o l'extraction (608), vers la mémoire à partir de la base de données (510), d'une seule ou de plusieurs lignes de données (204.1 à 204.n) pour chacun des au moins deux niveaux de hiérarchie, au moyen de laquelle chacune des lignes de données (204.3) comprend sélectivement les valeurs de paramètre qui sont contenues dans les éléments de données (N33, N34, N35) qui appartiennent audit niveau hiérarchique (L3) ;
o le classement et le regroupement (610) des lignes de données extraites, au moyen desquels le regroupement est réalisé de sorte que toutes les lignes de données qui ont été extraites pour un niveau hiérarchique particulier (L3) et qui partagent, dans le fichier des données hiérarchiques, les mêmes éléments de données que leur noeud parent, sont regroupés ensemble, et au moyen .desquels le classement est réalisé de sorte que lesdites lignes de données groupées (204.3, 204.4) succèdent directement à celle (204.2) parmi les lignes de données extraites qui comprend une valeur de paramètre qui est contenue dans ledit noeud parent (N19) et/ou qui est contenue dans un noeud frère (N21) dudit noeud parent dans le fichier des données hiérarchiques
o l'écriture (612) des lignes de données classées et regroupées de chacun des au moins deux niveaux de hiérarchie dans la structure de la table qui est dans la mémoire ;
la fourniture de la structure de la table (515) pour l'affichage à l'attention d'un utilisateur via l'affichage (520) d'un dispositif mobile de télécommunication (112).

15. Support non transitoire lisible par ordinateur, avec des instructions qui y sont stockées, qui, lorsqu'elles sont exécutées par au moins un processeur d'un dispositif informatique, amènent le dispositif informatique à effectuer le procédé selon la revendication 14.
